# EUROPEAN PATENT APPLICATION

(11) **EP 2 051 516 A1**
(43) Date of publication of application: **22.04.2009**
(21) Application number: 07791779.7
(22) Date of filing: 01.08.2007
(51) Int. Cl.: H04N 5/91, G11B 27/00, G11B 27/034, G11B 27/10, H04N 5/93

(54) **INFORMATION PROCESSING DEVICE, INFORMATION PROCESSING METHOD, AND COMPUTER PROGRAM**

(30) Priority: 10.08.2006 JP 2006218765
(71) Applicant: Sony Corporation, Tokyo 108-0075 (JP)
(72) Inventor: MAE, Atsushi, Tokyo 1080075 (JP); ARIDOME, Kenichiro, Tokyo 1080075 (JP); ISOBE, Yukio, Tokyo 1080075 (JP); MORIMOTO, Naoki, Tokyo 1080075 (JP)
(74) Representative: Melzer, Wolfgang
(86) International application number: PCT/JP2007/065099
(87) International publication number: WO 2008/018345

(57) **Abstract**

A configuration is provided which realizes efficiency of playback and editing of recorded data in an information recording medium. Recording is performed of GOP attributes, as mark management information corresponding to a PLM (= EM) mark serving as playback start point information stipulated in the AVCD format, indicating whether or not a GOP including the mark is a GOP needing decoding information of another GOP at the time of decoding processing of the GOP, and playback and editing are performed referencing these information, thereby preventing decoding unnecessary in playback processing, and enabling editing without leaving data unnecessary in editing processing.

## Description

### Technical Field

The present invention relates to an information processing device, information processing method, and computer program, for performing data recording/playback processing. More specifically, the present invention relates to an information processing device, information processing method, and computer program, wherein, in decoding playback processing of encoding-compressed data, decoding of unnecessary data is prevented so as to enable efficient playback, and wherein, in editing of recorded data, leaving of unnecessary data is avoided.

### Background Art

As of recent, there have appeared video cameras of a type which save moving images and still images in disks instead of conventional recording tape, as the recording capacity of disk type recording media has increased. Disk type recording media is capable of random access, so desired scenes can be efficiently found, use without deterioration of the information recording medium (media) can be made since access to the data is non-contact. For example, the number of users of DVD cameras is increasing year by year, due to excellent image quality, and ease of use such as editing capabilities.

Further, as of recent, equipment which records and plays Hi-Vision data with improved data quality, i.e., HD (High-Definition) digital data, has been developed and used.

Also, AVCHD format has been proposed as a newest HD data recording format. AVCHD format is a format wherein a moving image stream taken with a video camera is encoded into an MPEG-2TS stream, and has a hierarchical data management configuration.

With this AVCHD format, files which are index (index), movie object (MovieObject), play list (PlayList), clip information (ClipInformation), and clip AV stream (CLipAVStream) are generated and recorded. This recording format will be described in detail in the description of the present embodiment.

With this AVCHD format actual data which is recorded is recorded in a clip AV stream (CLipAVStream) file, and management information and the like corresponding to the actual data is set so as to be recorded scattered in the attribute information files of index (index), movie object (MovieObject), play list (PlayList), and clip information (ClipInformation).

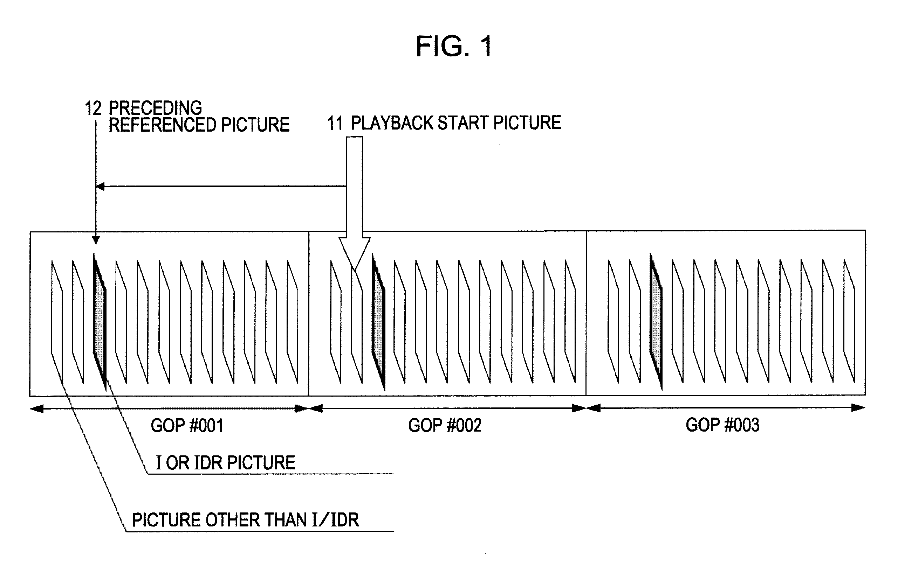

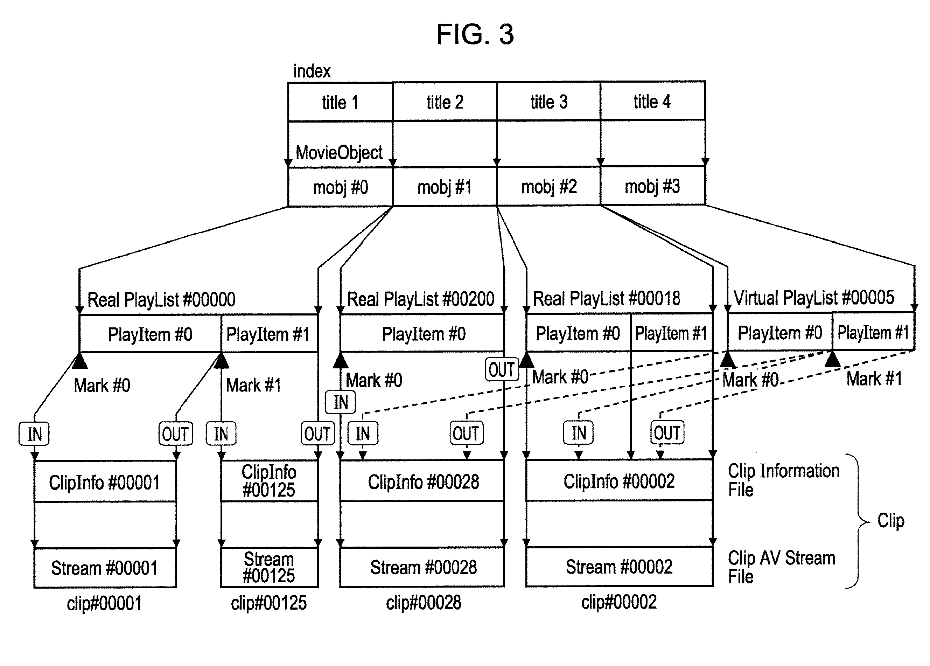

With the AVCHD format, a moving image stream is encoded into an MPEG2-TS stream and recorded. The encoding configuration with the AVCHD format will be described with reference to Fig. 1. Encoded data has an encoding increment called a GOP (Group Of Pictures) This is the GOP #001, GOP #002, and GOP #003 shown in Fig. 3.

A GOP is configured of a single I (Intra) picture serving as a reference frame and multiple reference pictures A reference picture is configured of difference data of the referenced picture and so forth, so information of the reference picture is indispensable for decoding reference pictures. Note that in the AVCHD format, the referenced picture is called IDR (Instantaneous Decoding Refresh) picture.

As for GOPs, there are closed (CLOSED) GOPs capable decoding pictures within the GOP without using information of another GOP, and non-closed GOPs which need to use information of another GOP, i.e., the preceding GOP.

On the other hand, with players which perform playback processing, in many cases, playback can be performed by selecting various playback start points from the moving image data to be played. For example, chapters are set in the moving image data as increments of playback, and the player can play with the starting position of the chapters specified.

While the picture that the playback start position will be a picture with a GOP configuration described above, but there is no way to determine whether that picture is a picture included in a closed (CLOSED) GOP capable decoding being decoded without using information of another GOP, or a picture included in a non-closed GOP which needs to use information of another GOP. Accordingly, players which perform playback processing perform processing of read in an IDR (referenced) picture temporarily preceding the point regarding which a playback specification has been made, decode, and play from the playback specification position.

For example in the event that the playback start picture 11 shown in Fig. 1 has been specified, the preceding referenced picture 12 which is temporarily preceding this point is read in and decoded, and playing is performed from the playback specification position. However, with such processing, in the event that the picture at the playback specification position, e.g., the GOP #002 to which the playback start picture 11 shown in Fig. 1 belongs is a closed (CLOSED) GOP, the decoding processing of the referenced picture belonging to the one-preceding GOP #001 is processing which is completely a waste. This leads to a problem in that playback start time is delayed.

### Disclosure of Invention

### Technical Problem

The present invention has been made in light of the above-described problem, and relates to an information processing device, information processing method, and computer program, wherein, in decoding playback processing of encoding-compressed data, decoding of unnecessary data is prevented so as to enable efficient playback, and wherein, in editing of recorded data, leaving of unnecessary data is avoided.

It is an object to provide an information processing device, information processing method, and computer program, capable of speedy decoding and playback without performing unnecessary decoding processing in playback of encoded data having a GOP configuration in particular, and wherein, in editing of recorded data, leaving of unnecessary data is avoided.

### Technical Solution

A first aspect of the present invention is an information processing device characterized in having a control unit for performing data recording processing control as to an information recording medium;
wherein the control unit is of a configuration for performing recording of encoded data in which GOPs (Group Of Pictures) configured of picture groups have been set, and recording control of management information corresponding to recorded data;
and wherein the control unit is of a configuration for performing recording processing control of GOP attributes, as mark management information corresponding to a mark serving as playback start point information, indicating whether or not a GOP including the mark is a GOP needing decoding information of another GOP at the time of decoding processing of the GOP.

Further, in an embodiment of the information processing device according to the present invention, the control unit is characterized in being of a configuration for performing control to record, as the mark management information, playback specification point-in-time (PTS: presentation time stamp) information of a referenced picture included in the GOP to which the mark belongs.

Further, in an embodiment of the information processing device according to the present invention, the control unit is characterized in being of a configuration for performing control to record, as the mark management information, difference information between the head picture of the GOP to which the mark belongs and the playback specification point-in-time (PTS: presentation time stamp) of a referenced picture included in the GOP to which the mark belongs.

Further, in an embodiment of the information processing device according to the present invention, the control unit is characterized in being of a configuration for performing control to record, as the mark management information, device information which has executed the recording processing.

Further, in an embodiment of the information processing device according to the present invention, the control unit is characterized in being of a configuration for performing data recording control following a data recording format having a hierarchical management configuration that has been stipulated beforehand, and being of a configuration for performing control for recording the mark management information in an attribute information file storing attribute information stipulated with the data recording format.

Further, in an embodiment of the information processing device according to the present invention, the control unit is characterized in being of a configuration for performing data recording control following the AVCHD format which is a data recording format having a hierarchical management configuration that has been stipulated beforehand, and being of a configuration for performing control for recording the mark management information in an attribute information file storing attribute information stipulated with the AVCHD recording format.

Further, in an embodiment of the information processing device according to the present invention, the control unit is characterized in being of a configuration for performing control to record the mark management information in a play list file or clip information file stipulated with the AVCHD recording format.

Further, in an embodiment of the information processing device according to the present invention, the control unit is characterized in being of a configuration for performing control to record the mark management information in a maker-corresponding information write-permitted region, set in a play list file or clip information file stipulated with the AVCHD recording format.

Further, a second aspect of the present invention is an information processing device characterized in having a control unit for performing control of playback or editing processing of data recorded in an information recording medium;
wherein the control unit is of a configuration for performing processing of reading encoded data in which GOPs (Group Of Pictures) configured of picture groups have been set from the information recording medium at the time of performing playback or editing processing, obtaining mark management information corresponding to a mark serving as playback start point information from the information recording medium, confirming GOP attributes indicating whether or not a GOP including the mark is a GOP needing decoding information of another GOP at the time of decoding processing of the GOP, based on the mark management information, and determining a decoding start point in playback processing or a leaving start point in editing processing.

Further, in an embodiment of the information processing device according to the present invention, the control unit is characterized in being of a configuration for performing processing of obtaining playback specification point-in-time (PTS: presentation time stamp) information of a referenced picture included in the GOP to which the mark belongs from the mark management information, and determining a decoding start point in playback processing or a leaving start point in editing processing, based on comparison results with a playback specification point-in-time (PTS) of a picture corresponding to the mark.

Further, in an embodiment of the information processing device according to the present invention, the control unit is characterized in being of a configuration for performing processing of obtaining difference value information between the head picture of the GOP to which the mark belongs and the playback specification point-in-time (PTS: presentation time stamp) of a referenced picture included in the GOP, and determining a decoding start point in playback processing or a leaving start point in editing processing, based on comparison results of the difference between a mark-corresponding playback specification point-in-time (PTS) corresponding to the mark and a GOP-corresponding playback specification point-in-time (PTS) after the playback specification point-in-time corresponding to the mark, and difference value information recorded in the mark information.

Further, in an embodiment of the information processing device according to the present invention, the control unit is characterized in being of a configuration for obtaining, from the mark management information, device information which has executed the recording processing, and changing the processing form based on the obtained device information.

Further, in an embodiment of the information processing device according to the present invention, the control unit is characterized in being of a configuration for performing playback or editing processing of recorded data following the AVCHD format which is a data recording format having a hierarchical management configuration that has been stipulated beforehand, and being of a configuration for obtaining the mark management information from an attribute information file storing attribute information stipulated with the AVCHD recording format.

Further, in an embodiment of the information processing device according to the present invention, the control unit is characterized in being of a configuration for obtaining the mark management information from a playlist file or clip information file stipulated with the AVCHD recording format.

Further, in an embodiment of the information processing device according to the present invention, the control unit is characterized in being of a configuration for obtaining the mark management information from a maker-corresponding information write-permitted region, set in a play list file or clip information file stipulated with the AVCHD recording format.

Further, a third aspect of the present invention is an information processing method characterized in performing data recording processing control as to an information recording medium with an information processing device, the method comprising:
a recording control step wherein a control unit performs recording of encoded data in which GOPs (Group Of Pictures) configured of picture groups have been set, and recording control of management information corresponding to recorded data;
wherein the recording control step includes a mark management information recording step for performing recording processing control of GOP attributes, as mark management information corresponding to a mark serving as playback start point information, indicating whether or not a GOP including the mark is a GOP needing decoding information of another GOP at the time of decoding processing of the GOP.

Further, in an embodiment of the information processing device according to the present invention, the mark management information recording step is characterized in being a step for performing control to record, as the mark management information, playback specification point-in-time (PTS: presentation time stamp) information of a referenced picture included in the GOP to which the mark belongs.

Further, in an embodiment of the information processing device according to the present invention, the mark management information recording step is characterized in being a step for performing control to record, as the mark management information, difference information between the head picture of the GOP to which the mark belongs and the playback specification point-in-time (PTS: presentation time stamp) of a referenced picture included in the GOP to which the mark belongs.

Further, in an embodiment of the information processing device according to the present invention, the mark management information recording step is characterized in being a step for performing control to record, as the mark management information, device information which has executed the recording processing.

Further, in an embodiment of the information processing device according to the present invention, the mark management information recording step is characterized in being a step for performing data recording control following a data recording format having a hierarchical management configuration that has been stipulated beforehand, and being a step for performing control for recording the mark management information in an attribute information file storing attribute information stipulated with the data recording format.

Further, in an embodiment of the information processing device according to the present invention, the mark management information recording step is characterized in being a step for performing data recording control following the AVCHD format which is a data recording format having a hierarchical management configuration that has been stipulated beforehand, and being a step for performing control for recording the mark management information in an attribute information file storing attribute information stipulated with the AVCHD recording format.

Further, in an embodiment of the information processing device according to the present invention, the mark management information recording step is characterized in being a step for performing control to record the mark management information in a play list file or clip information file stipulated with the AVCHD recording format.

Further, in an embodiment of the information processing device according to the present invention, the mark management information recording step is characterized in being a step for performing control to record the mark management information in a maker-corresponding information write-permitted region, set in a play list file or clip information file stipulated with the AVCHD recording format.

Further, a fourth aspect of the present invention is an information processing method characterized in performing control of playback or editing processing of data recorded in an information recording medium with an information processing device, the method comprising:
a data processing step wherein a control unit performs processing of reading encoded data in which GOPs (Group Of Pictures) configured of picture groups have been set from the information recording medium, obtains mark management information corresponding to a mark serving as playback start point information from the information recording medium, confirms GOP attributes indicating whether or not a GOP including the mark is a GOP needing decoding information of another GOP at the time of decoding processing of the GOP, based on the mark management information, and determines a decoding start point in playback processing or a leaving start point in editing processing.

Further, in an embodiment of the information processing device according to the present invention, the data processing step is characterized in being a step for performing processing of obtaining playback specification point-in-time (PTS: presentation time stamp) information of a referenced picture included in the GOP to which the mark belongs, and determining a decoding start point in playback processing or a leaving start point in editing processing, based on comparison results with a playback specification point-in-time (PTS) of a picture corresponding to the mark.

Further, in an embodiment of the information processing device according to the present invention, the data processing step is characterized in being a step for performing control of obtaining difference information between the head picture of the GOP to which the mark belongs and the playback specification point-in-time (PTS: presentation time stamp) of a referenced picture included in the GOP to which the mark belongs, and determining a decoding start point in playback processing or a leaving start point in editing processing, based on comparison results of the difference between a mark-corresponding playback specification point-in-time (PTS) corresponding to the mark and a GOP-corresponding playback specification point-in-time (PTS) after the playback specification point-in-time corresponding to the mark, and difference value information recorded in the mark information.

Further, in an embodiment of the information processing device according to the present invention, the data processing step is characterized in being a step for obtaining, from the mark management information, device information which has executed the recording processing, and changing the processing form based on the obtained device information.

Further, in an embodiment of the information processing device according to the present invention, the data processing step is characterized in being a step for performing playback or editing processing of recorded data following the AVCHD format which is a data recording format having a hierarchical management configuration that has been stipulated beforehand, and being a step for obtaining the mark management information from an attribute information file storing attribute information stipulated with the AVCHD recording format.

Further, in an embodiment of the information processing device according to the present invention, the data processing step is characterized in being a step for obtaining mark management information from a play list file or clip information file stipulated with the AVCHD recording format.

Further, in an embodiment of the information processing device according to the present invention, the data processing step is characterized in being a step for obtaining the mark management information from a maker-corresponding information write-permitted region, set in a play list file or clip information file stipulated with the AVCHD recording format.

Further, a fifth aspect of the present invention is a computer program characterized in causing an information processing device to perform data recording processing control as to an information recording medium, the program comprising:
a recording control step wherein a control unit performs recording of encoded data in which GOPs (Group Of Pictures) configured of picture groups have been set, and recording control of management information corresponding to recorded data;
wherein the recording control step includes a mark management information recording step for performing recording processing control of GOP attributes, as mark management information corresponding to a mark serving as playback start point information, indicating whether or not a GOP including the mark is a GOP needing decoding information of another GOP at the time of decoding processing of the GOP.

Further, a sixth aspect of the present invention is a computer program characterized in causing an information processing device to perform control of playback or editing processing of data recorded in an information recording medium, the program comprising:
a data processing step wherein a control unit performs processing of reading encoded data in which GOPs (Group Of Pictures) configured of picture groups have been set from the information recording medium at the time of performing playback or editing processing, obtains mark management information corresponding to a mark serving as playback start point information from the information recording medium, confirms GOP attributes indicating whether or not a GOP including the mark is a GOP needing decoding information of another GOP at the time of decoding processing of the GOP, based on the mark management information, and determines a decoding start point in playback processing or a leaving start point in editing processing.

Note that the computer program according to the present invention is a computer program which can be provided to computer systems capable of executing various types of program code for example, by way of recording media or communication media, for example, recording media such as CDs, FDs, MOs, or the like, or communication media such as networks or the like. Providing such a program in a computer-readable format realizes processing corresponding to the program on the computer system.

Further objects, features, and advantages of the present invention will become apparent from the later-described embodiments of the present invention and the attached drawings. Note that system as used in the present specification is a logical group configuration of multiple devices, and is not restricted to each component device being within the same housing.

### Advantageous Effects

According to an embodiment of the present invention, in decoding/playback processing of data which has been encoded and compressed, unnecessary decoding is prevented so as to enable efficient playback, and in editing of recorded data, editing is enabled without leaving unnecessary data. Specifically, a configuration has been made wherein recording is performed of GOP attributes, as mark management information corresponding to a PLM (= EM) mark serving as playback start point information stipulated in the AVCD format, indicating whether or not a GOP including the mark is a GOP needing decoding information of another GOP at the time of decoding processing of the GOP, and playback and editing are performed referencing these information, thereby preventing decoding unnecessary in playback processing, and enabling editing without leaving data unnecessary in editing processing.

### Brief Description of Drawings

[Fig. 1] Fig. 1 is a diagram for describing a playback processing example with encoded data having a GOP configuration.
[Fig. 2] Fig. 2 is a block diagram illustrating a configuration example of an information processing device according to the present invention.
[Fig. 3] Fig. 3 is a diagram for describing the data configuration of recorded data in an information recording medium.
[Fig. 4] Fig. 4 is a UML (Unified Modeling Language) diagram illustrating the relation of playlist (PlayList), clip (Clip), clip information (ClipInformation), and clip AV stream (CLipAVStream).
[Fig. 5] Fig. 5 is a diagram for describing the referencing relation of clips with playlists.
[Fig. 6] Fig. 6 is a diagram for describing the relation between a playlist corresponding to a main path and sub path set in the playlist, and clips.
[Fig. 7] Fig. 7 is a diagram for describing the management structure of files recorded in an information recording medium.
[Fig. 8] Fig. 8 is a diagram describing procedures of a playlist being generated along with clips of an AV stream along with recording/shooting with a video camera.
[Fig. 9] Fig. 9 is a diagram describing procedures of a playlist being generated along with clips of an AV stream along with recording/shooting with a video camera.
[Fig. 10] Fig. 10 is a diagram for describing a stream configuration as encoded data following the AVCHD format.
[Fig. 11] Fig. 11 is a diagram for describing a stream configuration as encoded data following the AVCHD format.
[Fig. 12] Fig. 12 is a diagram illustrating a flowchart for describing a general processing sequence in a case of executing playback of data recorded with the AVCHD format from a particular playback start point.
[Fig. 13] Fig. 13 is a diagram illustrating the syntax of a clip information file.
[Fig. 14] Fig. 14 is a diagram for describing a processing example of a case of selecting a GOP regarding which playback is to be started from the time of an entry mark (EM: EntryMark).
[Fig. 15] Fig. 15 is a diagram for describing a write region for mark management information in a playlist file.
[Fig. 16] Fig. 16 is a diagram showing a flowchart for describing a playback processing sequence in a case of applying mark management information.
[Fig. 17] Fig. 17 is a diagram for describing determination processing in step S209 in the flowchart shown in Fig. 16.
[Fig. 18] Fig. 18 is a diagram showing a flowchart for describing an editing processing sequence with no waste, to which mark management information has been applied.
[Fig. 19] Fig. 19 is a diagram for describing a write region of mark management information in a clip information file.
[Fig. 20] Fig. 20 is a diagram for describing IDR PTS offset information.
[Fig. 21] Fig. 21 is a diagram showing a flowchart for describing a playback processing sequence in a case of applying mark management information.
[Fig. 22] Fig. 22 is a diagram for describing determination processing in step S409 in the flowchart shown in Fig. 21.
[Fig. 23] Fig. 23 is a diagram showing a flowchart for describing an editing processing sequence with no waste, to which mark management information has been applied.

### Best Modes for Carrying Out the Invention

The information processing device, information processing method, and computer program, according to the present invention, will be described in detail below, with reference to the drawings. Note that description will follow the following order.
1. System Configuration
2. Data Format
3. Recording and Usage Configuration of Mark Management Information
   (3-1) Embodiment of Recording Mark Management Information in a Maker's Information (MakersInformation) Region in Increments of Playlist Marks in a Playlist File
   (3-2) Embodiment of Recording Mark Management Information in a Maker's Private Data (MakersPrivateData) Region in Clip Information File

### 1. System Configuration

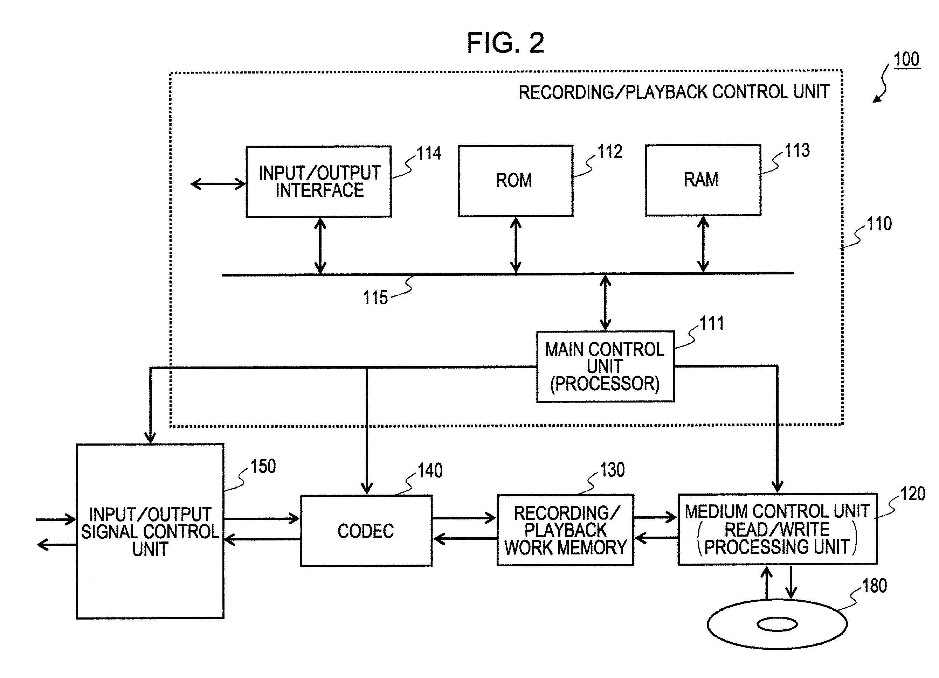

Fig. 2 is a block diagram illustrating the configuration of an information processing device 100 according to an embodiment of the present invention. Fig. 2 illustrates the configuration of a video camera which is an example of the information processing device according to the present invention. As shown in Fig. 2, the information processing device 100 includes a recording/playback control unit 110, a medium control unit (read/write processing unit) 120, recording/playback work memory 130, a codec 140, and an input/output signal control unit 150. The recording/playback control unit 110 has a main control unit (processor) 111, ROM 112, RAM 113, and an input/output interface 114.

The information processing device 100 records and plays data such as moving images and the like using information recording media 180, for example. Data recording to the information recording media 180 is executed following the AVCHD format. The data recording configuration following the AVCHD format will be described in detail in the next section, [2. Data Format].

At the time of data recording processing, moving image data, for example, input from the input/output signal control unit 150 is subjected to execution of encoding at the codec 140. At the codec 140, encoding is performed on the video stream and audio stream making up the input moving image signals for example, and a multiplexed data stream is generated. The data encoded at the codec 140 is stored in the recording/playback work memory 130, and then recorded in the information recording media 180 by processing of the media control unit 120.

The encoding processing executed at the codec 140 at the time of data recording processing differs between a case wherein the recorded data is moving images and a case of still images, and moving image files and sill image files are corded in the information recording medium 180.

The recording/playback control unit 110 controls various types of processing, such as data recording processing and data playback processing, to be executed at the information processing device. The recording/playback control unit 110 has a main control unit (processor) 111, ROM 112, RAM 113, an input/output interface 114, and a bus 115 connecting these with each other.

The main control unit (processor) 111 gives start/stop instructions for encoding/decoding processing to the codec 140, for example. Also, the main control unit (processor) 111 outputs execution commands for data read/write to/from the information recording media 180 to the media control unit 120. Further, the main control unit (processor) 111 performs control of the input/output signal control unit 150 so as to capture input signals from the codec 140, and output the captured input signals to the codec 140.

The ROM 112 of the recording/playback control unit 110 is memory for holding programs executed at the main control unit (processor) 111, various parameters, and so forth, and is realized by EERPOM such as flash memory or the like., for example. The RAM 113 is memory for holding work data and the like necessary for execution of programs at the main control unit (processor) 111, and is realized by SRAM or DRAM or the like, for example. The input/output interface 114 is an interface connected to, for example, a user input unit, display unit, network, and so forth, for performing external input/output of data and commands. For example, this is also used for updating programs within the ROM 112.

### 2. Data Format

Fig. 3 illustrates an example of a data configuration for recording data in the information recording media 180. In the following, the data recording configuration following the AVCHD format will be described. As shown in the drawing, at the time of encoding a moving image stream shot with a video camera into an MPEG2-TS stream and recording, files which are index (index), movie object (MovieObject), play list (PlayList), clip information (ClipInformation), and clip AV stream (CLipAVStream) are generated and recorded. Also, clip information files corresponding to clip AV stream files in predetermined data increments will be collectively referred to as clips, for convenience. Also, the files other than clip AV stream files storing shot moving image data, which are index (index), movie object (MovieObject), play list (PlayList), and clip information (ClipInformation), storing management information and so forth, serve as attribute information files of the files. The following is a table describing details of each file.

**Table 1**

| File type | Maximum number | Role |
|---|---|---|
| index | 1 | Base file for managing the overall media. Manages the correlation between the title shown to the user and MovieObject. With the AVCHD format, the play order of the playlist which originally should be managed by the MovieObject file is managed in the metadata in the index file. |
| MovieObject | 1 | File managing the playlist played when a title is specified in the BD-ROM format. However, with the AVCHD format, this file is not referenced, and the relation between the playlist and tile is managed by metadata in the index file. |
| Real | Total 2000 | Playlist for original titles. Video recorded/played is registered in the order in which it was recorded. |
| Virtual PlayList | | Playlist for creating a user-defined playback list by non-destructive editing. A virtual playlist does not have any of its own Clips, but rather points to and plays Clips recorded in one of the real playlists. |
| Clip Information | 4000 | Exists as a pair with the Clip AV Stream, and described therein is information relating to the stream that is necessary for playing the actual stream. |
| Clip AV Stream | 4000 | A file storing a stream recorded in MPEG2-TS. AVC image data is saved in this file. |

The information recording medium 180 is its entirety managed at the file type layer of the index. An index file is created for each title to be shown to the user, managing the correlation with a movie object. With the AVCHD format, the play order of the playlist which originally should be managed by the movie object file is managed in the metadata in the index file. Upon mounting the information recording medium to a player, first, the index is read in, and the user can see the tiles described in the index.

A movie object is a file managing a playlist to be played. References to movie objects are listed in the index as title entrances. However, with the AVCHD format, the move object file is not referenced, and the relation between the playlist and tile is managed by metadata in the index file.

A playlists is a playback list provided corresponding to a title shown to the user, and is configured of at least one or more play items. Each play item has a playback start point (IN point) and playback end point (OUT point) corresponding to the clip, thereby specifying the playback section thereof. Arranging multiple play items on a time axis within the play list allows the playback order of each playback section to be specified. Also, play items reference different clips can be included in a single playlist.

The relation between clip and playlist can be freely set. For example, reference to one clip can be performed from two playlists with different IN points and OUT points. Further, the reference relation can be freely set between titles and movie objects. Playlists are generally classified into two types in accordance with the reference relations as to clips, real playlists and virtual playlists.

Real lists are playlists for original titles, and have play items regarding a video stream recorded/taken with a video camera, in the order recorded.

Virtual playlists are playlists for creating a user-defined playback list by non-destructive editing, and virtual playlists do not have any of its own clips (AV streams), but rather point to a clip registered in one of the real playlists or a partial range thereof. That is to say, the user can cut out only necessary playback sections from multiple clips, group play items pointing to these, and edit a virtual playlist.

The clip AV stream is a file in which a stream recorded in the information recording medium 180 in MPEG-TS format has been stored. Image data is stored in this file.

Clip information is a file which exists as a pair with the clip AV stream file, is a file in which is described information relating to the stream that is necessary for playing the actual stream.

As described above, with the AVCHD format, the attribute files index (index), movie object (MovieObject), play list (PlayList), and clip information (ClipInformation), and the AV stream (CLipAVStream) in which moving image data is stored, are generated and recorded with a hierarchical configuration as shown in Fig. 3.

Note that the names of these files and data are only an example, and other expressions may be used. The substantial contents of each file and data correspond as shown below.
(1) AV stream (CLipAVStream): content data
(2) clip information (ClipInformation): a file which corresponds to the AV stream in a one-to-one manner, and defines the attributes of the corresponding AV stream. (For example, coding, size, time → address conversion, playback management information, time map, etc., are included.)
(3) play item (PlayItem): data specifying the playback section as to clip information (ClipInformation) with a playback start point and playback end point.
(4) playlist (PlayList): a playback list configured of one or more play items (PlayItem).
(5) mark (Mark): generally exists in a playlist (PlayList), and indicates a certain temporal position of playback contents. Generally, between a mark and a mark is called a chapter.
(6) move object (MovieObject): A group of commands for performing playback control.
(7) title (Title): Group of playback lists (which a user can recognize).

Note that while in the following description, data and files having the above-described correspondence will be described as clip AV stream (CLipAVStream), clip information (ClipInformation), play item (PlayItem), playlist (PlayList), mark (Mark), movie object (MovieObject), and title (Title), the present invention is applicable to configurations having data, files, etc., of substantially the same content.

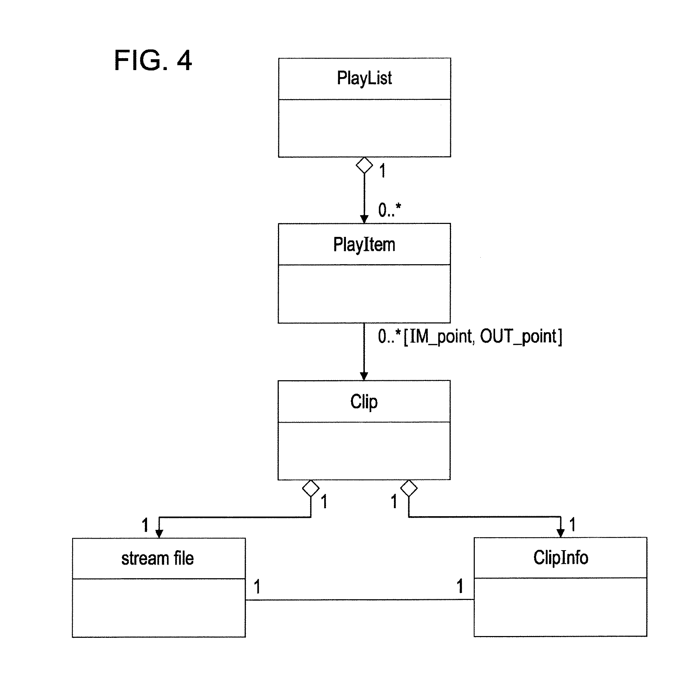

Fig. 4 is a UML (Unified Modeling Language) diagram illustrating the relation of playlist (PlayList), play item (PlayItem), clip (Clip), clip information (ClipInformation), and clip AV stream (CLipAVStream). A playlist is correlated with one or multiple play items, and a play item is correlated with one clip. Multiple play items with different start points and/or end points can be correlated to a single clip. A single clip AV stream file is reference from a single clip. In the same way, a single clip information file is reference from a single clip. Also, a clip AV steam file and clip information file have a one-to-one correlation. Defining such a structure enables non-destructive playback order specification wherein only selected portions are played without changing the clip AV stream file.

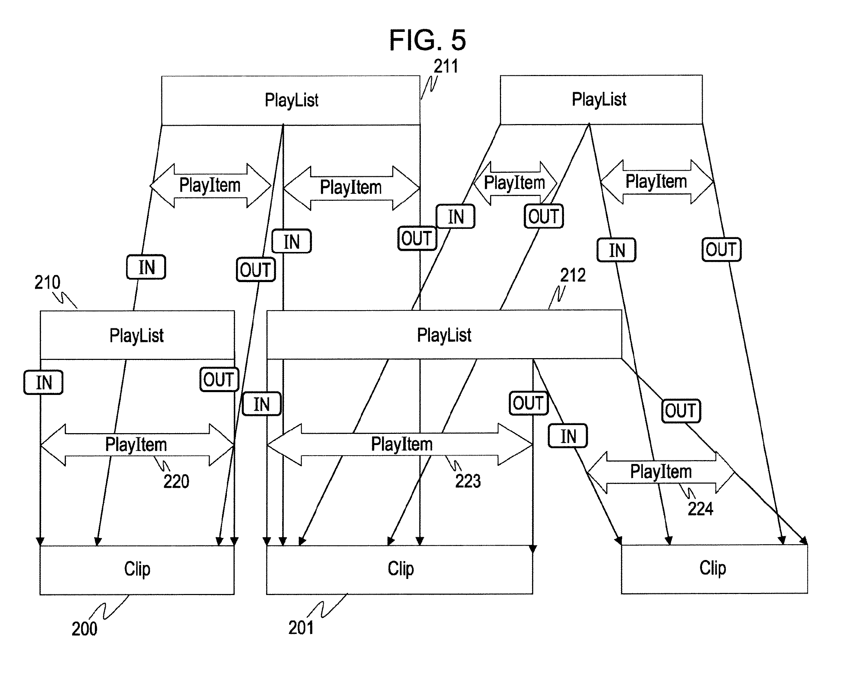

Also, as shown in Fig. 5, the same clip can be referenced from multiple playlists. Also, multiple clips can be specified from a single play list. A clip is referenced by an IN point and OUT point indicated by a play item in a play lists. In the example shown in Fig. 5, a clip 200 is referenced from a play item 220 of a playlist 210, and also has a section indicated by IN point and OUT point referenced by a play item 221 of play items 221 and 222 configuring the playlist 210. Also, a clip 201 has a section indicated by IN point and OUT point referenced from the play item 222 of the playlist 211, and a section indicated by IN point and OUT point of the play item 223 of play items 223 and 224 of the playlist 212 is referenced.

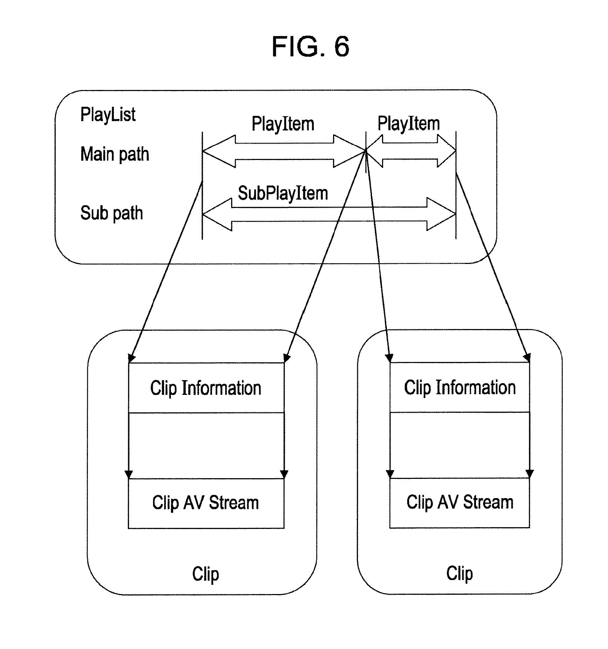

Note that a playlist can have a sub path corresponding to a sub play item, as juxtaposed to a play item which is primarily played, as exemplified in Fig. 6. For example, a post-recording play item provided to this playlist can be provided as a sub play item to this playlist. Though details will be omitted, playlists can have sub play items only in cases of satisfying predetermined conditions.

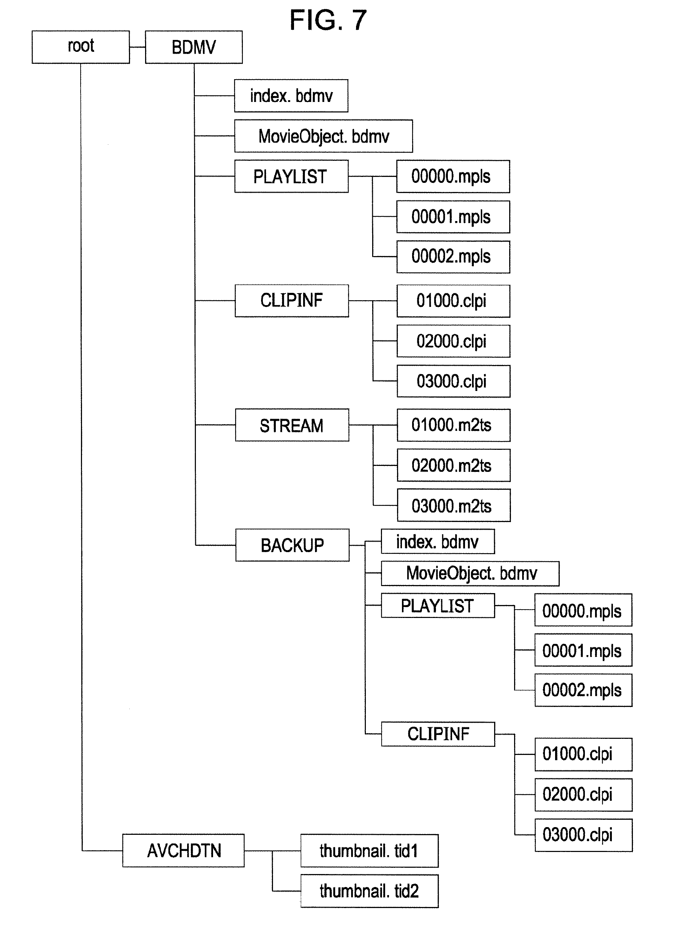

Next, the management structure of files recorded in the information recording media will be described with reference to Fig. 7. As described with reference to Fig. 3 through Fig. 5 and others, movie object (MovieObject), playlist (PlayList), and clip (Clip) are data recorded in the information recording media, and clip (Clip) includes the files clip information (ClipInformation) and clip AV stream (ClipAVStream). Files are hierarchically managed by a directory structure. First, one directory (root directory in the example in Fig. 7) is created on the recording medium. Beneath this directory is a range managed by a single recording/playback system.

Placed beneath the root directory are a directory [BDMV] and directory [AVCHDTN]. Placed in the director [AVCHDTN] are thumbnail files wherein a representative image of a clip, for example, has been reduced to a predetermined size. The data structure described with reference to Fig. 3 is stored in the director [BDMV].

Immediately beneath the director [BDMV] can be placed only the two of index file [index.bdmv] and movie object file [MovieObject.bdmv]. Also, playlist directory [PLAYLIST], clip information directory [CLIPINF], stream directory [STREAM], and directory [BACKUP] are placed beneath the BDMV directory [BDMV].

Described in the index file [index.bdmv] is the contents of the directory [BDMV]. Also, information of one or more movie objects is stored in the movie object file [MovieObject.bdmv].

The playlist directory [PLAYLIST] is a directory where a playlist database is placed. That is to say, the playlist directory [PLAYLIST] includes a playlist file [xxxxx.mpls] which is a file relating to a movie playlist. The playlist file [xxxxx.mpls] is a file created corresponding to each movie playlist. The [xxxxx] before the [.] (period) in the file name is five digits of numerals, and the [mpls] after the period is a suffix fixedly provided to this type of file.

The clip information directory [CLIPINF] is a directory placed in the database of the clip. That is to say, the clip information directory [CLIPINF] includes a clip information file [zzzzz.clpi] corresponding to each clip AV stream file. The [zzzzz] before the [.] (period) in the file name is five digits of numerals, and the [clpi] after the period is a suffix fixedly provided to this type of file.

The stream directory [STREAM] is a directory which an AV stream file which is an actual entity is placed. That is to say, the stream directory [STREAM] includes a clip AV stream file corresponding to each clip information file. A clip AV stream file is made up of an MPEG2 (Moving Pictures Experts Group 2) transport stream (hereafter abbreviated to MPEG2 TS), with a file name of [zzzzz.m2ts]. The [zzzzz] in the file name is the same as that in the corresponding clip information file, whereby the correlation of the clip information file and this clip AV stream file can be easily understood.

Note that two types of thumbnail files can be placed under the directory [AVCHDTN], thumbnail.tidx and thumbnail.tdt2. The thumbnail file thumbnail.tidx stores thumbnail images encrypted with a certain method. The thumbnail file thumbnail.tdt2 stores unencrypted thumbnail images. For example, thumbnail images corresponding to clips which a user has taken with a video camera can be though to be copy-free and have no need for encryption, so these will be stored in the thumbnail file thumbnail.tdt2.

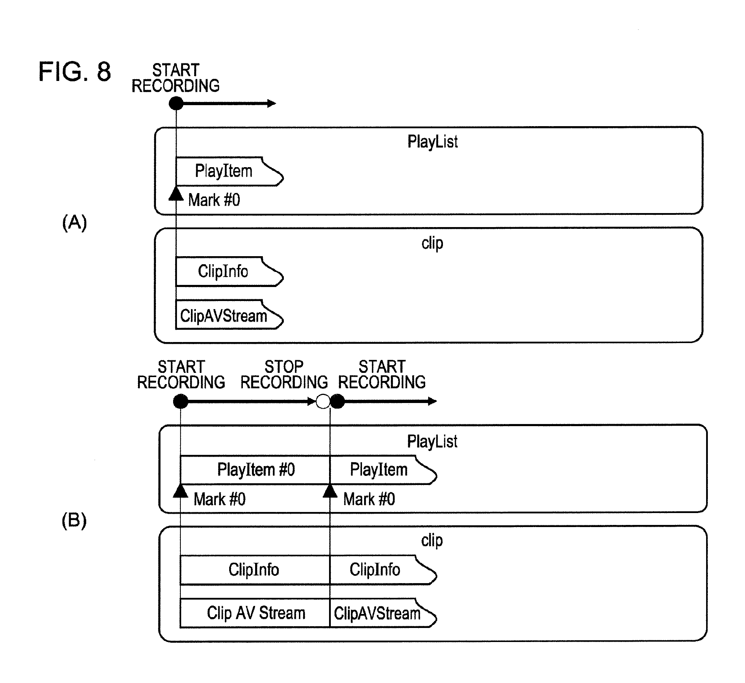

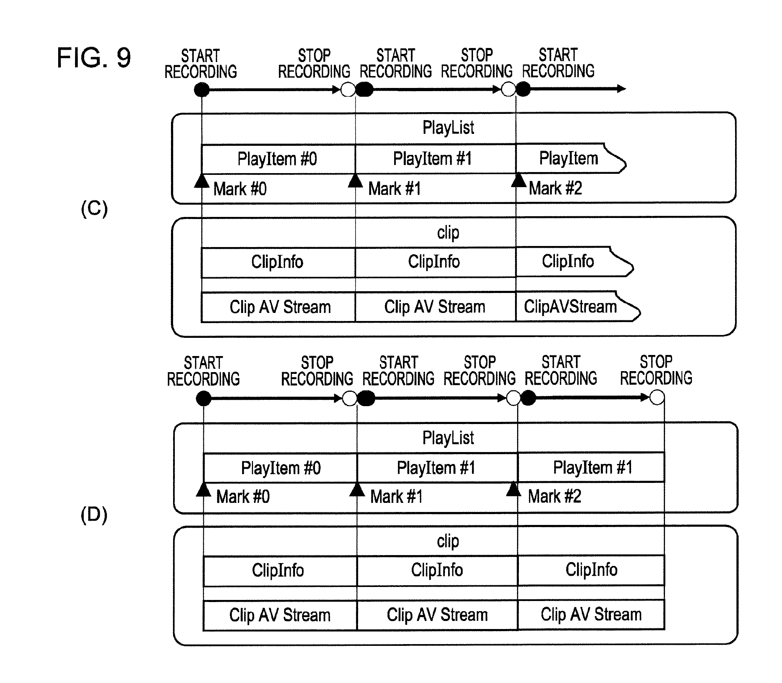

Next, procedures whereby a playlist is generated along with an AV stream clip following recording/shooting with a video camera will be described with reference to Fig. 8 and Fig. 9.

Fig. 8(a), (b), and Fig. 9 (c), (d) illustrate the processing of generating a clip and playlist in a case of a user repeatedly starting and stopping recording processing in the order of (a) through (d). As can be understood from Fig. 8 and Fig. 9, a play item is created for each section from the user starting recording to stopping recording. Also, one clip AV stream file is formed at the break of a recorded/shot stream, and a clip information file is also created accordingly. A clip is an increment regarding which continuous synchronized playback, i.e., playback needing real-time playback to be ensured.

Each time the user starts recording, a mark (Mark) serving as an entry mark (entry mark) is added to the head of the play item (an entry mark within a playlist is also called a "playlist mark (PLM)". Note that playlist mark is a collective name including entry marks serving as marks for stipulating chapters and link points indicating playback start positions not corresponding to chapters.

Within a single playlist, play items and marks are assigned consecutive sequence numbers. Though there is a restriction that an entry mark is always at the head of a playlist corresponding to moving images, the position of entry marks on the time axis can be moved by predetermined editing operations.

Each entry mark is an entry position from which the user accesses the stream. Accordingly, sections sectioned between adjacent entry marks (EM: EntryMark) (and the send section of the play item at the very end from the last mark) are smallest editing increments as viewed from the user, i.e., "chapters". The playback order of a playlist is defined by arraying the play items in playback order, and arraying the entry marks in playback order.

### 3. Recording and Usage Configuration of Mark Management Information

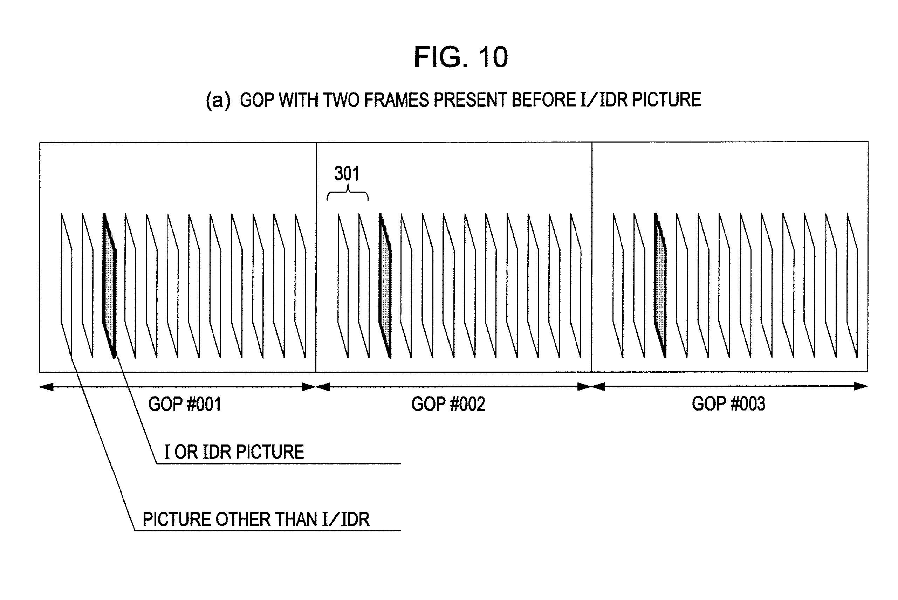

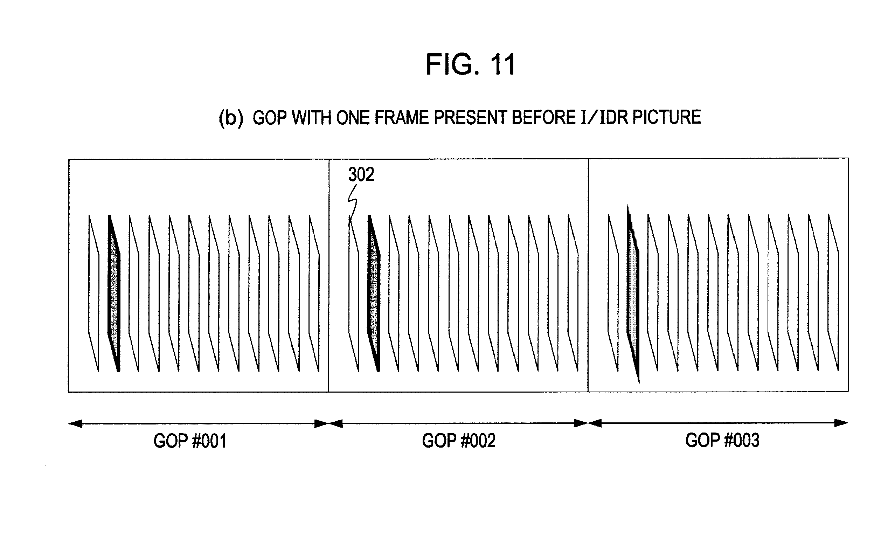

As described earlier, moving image data recorded in information recorded media is stored in a clip Av stream file in the MPEG-TS format, following the AVCHD format. The stream configuration of encoded data according to the AVCHD format will be described with reference to Fig. 10 and Fig. 11.

As described earlier, encoded data has GOPs (Group of Pictures) as a so-called encoding increment. This is GOP #1, GOP #2, GOP #3 shown in Fig. 10. A GOP is configured of one referenced picture [I (Intra) picture or IDR (Instantaneous Decoding Refresh) picture], and other reference pictures. Reference pictures are configured of difference data of the referenced picture and so forth, so in the case of decoding a reference picture, information of the referenced picture is indispensable.

As for GOPs, there are closed (CLOSED) GOPs capable decoding pictures within the GOP without using information of another GOP at the time of decoding pictures within the GOP, and non-closed GOPs which need to use information of another GOP, i.e., the preceding GOP.

A player which performs playback processing is capable of selecting various playback start points from the moving image data to be played, and performing playback. For example, chapters are set as playback increments in the moving image data, and players can perform playback specifying the start positions of the chapters (EM: entry mark (also called playlist marks (PLM))).

As described above, playlist mark is a collective expression including entry marks (EM) serving as marks for stipulating chapters, and link points indicating playback start positions not corresponding to chapters. Within a single playlist, play items and marks are assigned consecutive sequence numbers.

A picture at a playback star point is a picture configuring a GOP as described above, but there is no way to determine from the management information stipulated with the AVCHD format whether the picture is a picture included in a closed (CLOSED) GOP which can be decoded without using other GOP information, or a picture included in a non-closed GOP which needs information of other GOPs. Accordingly, generally, an IDR (referenced) picture preceding the point regarding which there has been a playback specification (EL (= PLM)) in the time direction is read in, decoded, and playback is performed from the playback specified position, as described earlier with reference to Fig. 1.

However, as described with reference to Fig. 1, such processing means that in the event that the GOP #002 to which the playback start picture 11 shown in Fig. 1 for example is a closed (CLOSED) GOP, the decoding processing of the reference picture belonging to the one preceding GOP #001 is completely unnecessary processing. Consequently, there are problems such as delaying of the playback start time.

With the present invention, a configuration wherein such unnecessary processing does not occur is realized.
Note that in the AVCHD format, GOPs which are set often have one or two reference pictures temporally preceding the I picture or IDR picture which is the referenced picture, as shown in Fig. 10 and Fig. 11. Fig. 10 illustrates an example wherein there are two reference pictures temporally preceding an IDR (I) picture which is a reference picture, and Fig. 11 illustrates an example wherein there is one reference picture temporally preceding an IDR (I) picture which is a reference picture.

In the event that the GOP is a non-closed GOP which references data of another GOP, the stream of the preceding GOP is necessary for decoding the pictures preceding the IDR (I). For example, in the event that the GOP #002 shown in Fig. 10 is a non-closed GOP, decoding of the two pictures 301 preceding the IDR (I) of the GOP #002 needs the decoding results of the stream of the preceding GOP #001. Also, in the event that the GOP #002 shown in Fig. 11 is a non-closed GOP, decoding of the pictures 302 preceding the IDR (I) of the GOP #002 needs the decoding results of the stream of the preceding GOP #001.

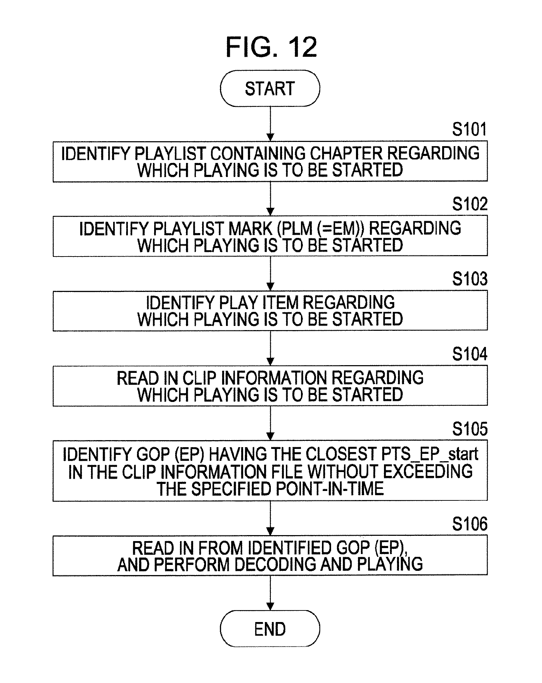

A common processing sequence in the case of executing playback of data recorded in the AVCHD format from a particular playback start point will be described with reference to the flowchart shown in Fig. 12. Note that the playback start point is set at the head position of the chapter. A chapter is a section which has been sectioned by entry marks (EM: EntryMark), as described earlier.

First, in step S101, the playlist containing the chapter regarding which playback is to be started is identified. As described earlier, playlists are provided corresponding to titles to be shown to the user, and are playback lists configured of at least one or more play items. Each play item has the playback section thereof specified by having a playback start point (IN point) and playback end point (OUT point) as to the clip.

In step S102, a playlist mark serving as the playback start point is identified. An entry mark (EM: EntryMark) is assigned to the head of the play item. Note that as described earlier, an entry mark within a playlist is also called a "playlist mark (PLM)". In step S102, the playlist mark (PLM) (= entry mark (EntryMark)) corresponding to the playback start point is identified.

Next, in step S103, a play item for starting playback is identified. A play item is playback section specification information having a playback start point (IN point) and playback end point (OUT point) corresponding to the clip, and can be obtained from the playlist file.

Next, in step S104, a clip information file including the playback start point is read in. The clip information file name corresponding to the play item identified in step S104 can be obtained from the playlist file, and the clip information file is read in following the obtained clip information file name.

In step S105, reading of information recorded in the clip information file is executed, and the GOP (EP) having the playback time (PTS_EP_start) closest to the playback specification point-in-time (PTS: presentation time stamp) corresponding to the picture at the playback start point without exceeding this is identified. The processing in this step S105 is equivalent to the preceding GOP identifying processing described earlier with reference to Fig. 1. Subsequently, in step S106, reading is performed from the identified GOP (EP), and decoding and playback is performed.

Note that EP means entry point. A brief description will be given regarding entry points (EP). With encoded streams having inter-frame compression such as with MPEG streams, places where decoding can be started are determined by GOP (Group Of Picture), and decoding processing is performed in increments of GOPs. In the case of performing playback, information regarding a decodable playback start position is necessary. Information regarding the head position of decoding increments is recorded as entry points (EP). An entry point (EP) means almost the same as a GOP. For example, we may say that in Fig. 10 and Fig. 11, GOP #001 = EP #001, GOP #002 = EP #002, and GOP #003 = EP #003.

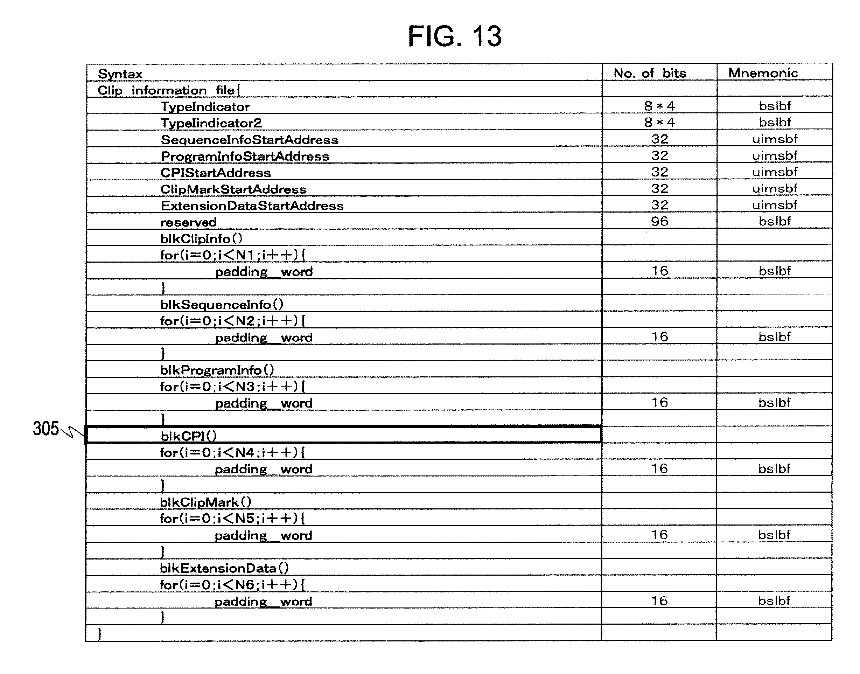

Entry point (EP) information is recorded in the clip information file, and can be obtained from the clip information file Fig. 13 shows the syntax of a clip information file. Clip information is a file defining attributes of an AV stream, including coding, size, time → address conversion, playback management information, time map, etc., with this information being recorded in the clip information corresponding to each referenced picture (IDR (I) picture).

In the clip information file shown in Fig. 13, the field [TypeIndicator] has a 32-bit data length, indicating that this file is a clip information file. The fields [SequenceInfoStartAddress] through [ExtensionDataStartAddress] each have 32-bit data lengths indicating the start addresses of the data blocks in this syntax. Start addresses are indicated by the number of bytes relative to the head byte stipulated in the file.

The clip information block [blkClipInfo()] through clip mark block [blkClipMark()] record the substantial contents to be recorded in the clip information file. That is to say, information relating to the actual stream that is necessary for playing the stream is recorded.

An EP map is recorded in the CPU block [blkCPI()] 305 of the clip information file shown in Fig. 13, as entry point (EP) information corresponding to the referenced picture (IDR (I) picture). For example, presentation time stamps (PTS) of IDR (I) pictures are set every 0.5 seconds, and an EP map with EP (entry points) set each timing is generated and recorded. An playback time (PTS_EP_start) corresponding to each GOP (EP) is registered in the EP map. That is to say, presentation time stamp (PTS) information corresponding to the IDR (I) pictures which are referenced pictures included in each GOP (EP) is registered for each GOP (EP).

For example, in the event that playback from an arbitrary point-in-time with a playback device (player) is desired, the address within the file for this playback position is obtained by referencing the CPU of the clip information file based on the playback specification point-in-time (PTS). This address is the head of a decoding increment, so the player can read out data from that point and decode, and display an image.

Thus, general processing of decoding and playing processing of data recorded following the AVCHD format is executed following the flow shown in Fig. 12. The processing in step S105 is processing for obtaining the GOP (EP) having the playback time (PTS_EP_start) closest to the playback specification point-in-time (PTS: presentation time stamp) corresponding to the picture at the playback start point without exceeding this, from the CPI (EP map) of the clip information file, and starting decoding from the GOP (EP) identified in step S106.

However, in the event of performing such processing, there is the possibility that unnecessary GOP decoding will be performed in the event that the GOP to which the picture specified as the playback start point belongs to is a closed (CLOSED) GOP which does not use data of another GOP, as described earlier, leading to needless delay in the playback start time.

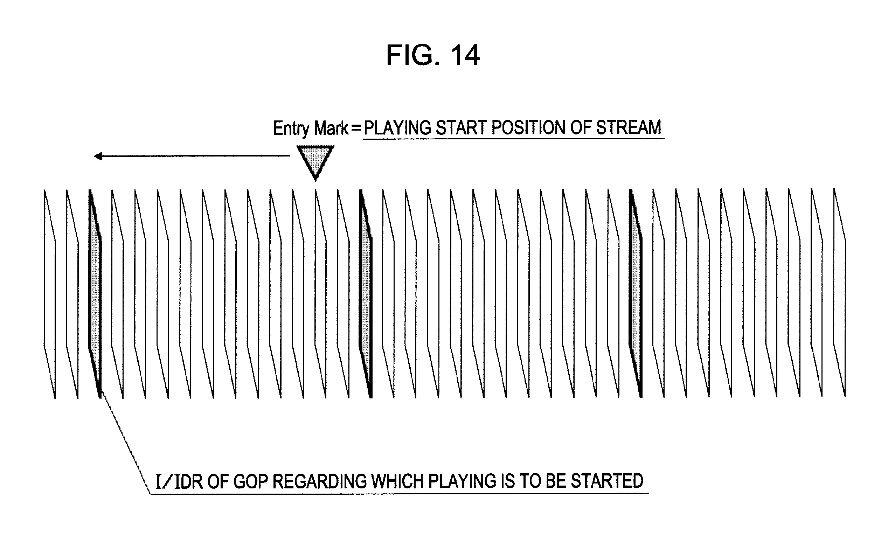

Time information which can be obtained from the clip information file in AVCHD only relates to IDR (I) pictures, so in the event of performing playback with chapter specified for example, decoding and playback from a referenced picture (IDR (I) picture) with playback time earlier than the entry mark (EM: EntryMark) if selecting a GOP for playback start from the time of an entry mark (EM: EntryMark) serving as chapter section specification information, as shown in Fig. 14.

That is to say, there is no information for determining which GOP, preceding or following, the picture of the entry mark (EM) serving as the playback start position belongs to, and there is no information for telling whether the GOP (EP) to which the picture of the entry mark (EM) belongs is a closed (CLOSED) GOP which does not need to reference data of another GOP or is a non-closed (CLOSED) GOP which needs reference, so the current state is that decoding and playback is performed from the referenced picture (IDR (I) picture) before (time direction) the entry mark (EM), as a safety measure.

In such playback processing, there is the problem that there is a delay in time up to the playback start by performing decoding of a GOP (EP) which originally is unnecessary. Further, there is also a problem at the time of editing the data recorded in the information recording medium. For example, in the stream shown in Fig. 14, in the event of dividing the stream at the position of the entry mark (EM) and deleting the first half, there is no guarantee that the picture of the entry mark (EM) can be played unless the stream up to the IDR (I) is left.

That is to say, there is no information for determining which GOP, preceding or following, the picture specified by the entry mark (EM) belongs to, and there is no information for telling whether the GOP (EP) to which the picture of the entry mark (EM) belongs is a closed (CLOSED) GOP which does not need to reference data of another GOP or is a non-closed (CLOSED) GOP which needs reference, so in order to perform editing which will enable playback of the entry mark (EM) picture in a sure manner, there is the need to perform editing which leaves the stream up to the referenced picture (IDR (I)) before the picture of the entry mark (EM). As a result, the preceding data may be wasted.

Thus, with only the information recorded in the playlist file and clip information file following the current AVCHD format, there are problems such as delay in playback processing, occurrence of unnecessary data in editing processing, and so forth.

These problems occur due to the fact that whether a GOP (EP) is a closed (CLOSED) GOP which does not need to reference data of another GOP at the time of decoding, and the fact that there is no way to tell which GOP, preceding or following, the entry mark (EM) (= PlayListMark) of the playback start position belongs to. With the present invention, the above problems in playback processing and editing processing are solved, as a configuration for recording this information in the attribute information file stipulated in the AVCHD format as mark management information.

Case wherein the recording region for information is the following two recording regions will each be described. (3-1) Embodiment of Recording Mark Management Information in a Maker's Information (MakersInformation) Region in Increments of Playlist Marks in a Playlist File
(3-2) Embodiment of Recording Mark Management Information in a Maker's Private Data (MakersPrivateData) Region in Clip Information File

(3-1) Embodiment of Recording Mark Management Information in a Maker's Information (MakersInformation) Region in Increments of Playlist Marks in a Playlist File
First, an embodiment wherein information, such as whether a GOP (EP) is a closed (CLOSED) GOP which does not need to reference data of another GOP at the time of decoding, is recorded in a maker's information (MakersInformation) region in a clip information file will be described.

As described earlier with reference to Fig. 3 through Fig. 7, with the AVCHD format, files which are index (index), movie object (MovieObject), play list (PlayList), clip information (ClipInformation), and clip AV stream (CLipAVStream) are generated and recorded.

Playlists are provided corresponding to titles to be shown to the user, and are playback lists configured of at least one or more play items. Each play item has the playback section thereof specified by having a playback start point (IN point) and playback end point (OUT point) as to the clip, thereby specifying the playback section.

With the present embodiment, information applicable to eliminating unnecessary decoding in playback and occurrence of unnecessary data in editing is recorded in the maker's information (MakersInformation) region in a clip information file.

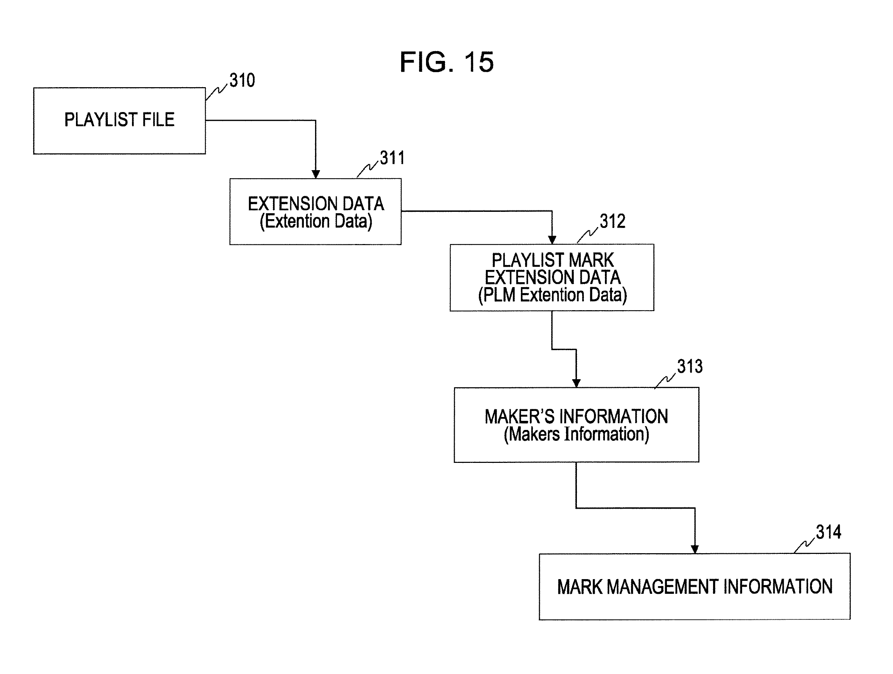

A mark management information write region in a playlist file will be described with reference to Fig. 15. As shown in Fig. 15, a playlist file 310 stores an extension data region (ExtentionData) 311, and a playlist mark extension region (PLM Extension Data) which is an extension data region in increments of playlist marks (PLM) is set in the extension data region (ExtentionData) 311. Multiple playlist marks can be set in a single playlist, and playlist mark extension regions (PLM Extension Data) 312 corresponding to the multiple playlist marks are set.

Maker's information (MakersInformation) 313 is set for each playlist mark extension regions 312. This maker's information 313 is a region set as a region where the maker of the data recording device which performs data recording processing is permitted to freely write information.

The above-described mark management information 314, i.e., the mark management information 314 applicable in eliminating unnecessary decoding in playback and occurrence of unnecessary data in editing, is recorded in this maker's information 313.

Examples of mark management information to be recorded in the maker's information (MakersInformation) region in increments of playlist marks of the playlist file is shown below.

**Table 2**

| Data size | Name of variable | Meaning |
|---|---|---|
| 8 bit | GOP_ATTR | Attribute value indicating whether GOP including point-in-time of PlayListMark is a CLOSED GOP 00: GOP attribute is unknown 01: GOP is CLOSED GOP 02: GOP is not CLOSED GOP |
| 32 bit | IDR_PTS | PTS of I/IDR of GOP including point-in-time of PlayListMark [45 kHz] 00000000h is stored if unknown |
| 88 bit | RESERVED | Reserved (ALL 0) |

As shown in the table above, mark management information includes GOP attribute information [GOP_ATTR] and IDR (I) picture PTS (presentation time stamp) information [IDR_PTS].

The GOP attribute information [GOP_ATTR] is information regarding whether or not the GOP including the playlist mark (PLM (= EM)) which can be specified as a playback start position is a CLOSED GOP which does not need to reference data of another GOP. The following three types of GOP attribute values are stored as information of 8 bits or smaller;
- 00:: GOP attribute is unknown
- 01:: GOP is CLOSED GOP
- 02:: GOP is not CLOSED GOP

IDR (I) picture PTS (presentation time stamp) information [IDR_PTS] stores a PTS (presentation time stamp) serving as the playback specification point-in-time of an IDR (I) picture which is the referenced picture of a GOP in which a playlist mark (PLM (= EM)) which can be specified as a playback start position is included.

These two information are recorded in the maker's information (MakersInformation) region in increments of playlist marks of the playlist file. Note that these information are each recorded as information corresponding to each playlist mark recorded in the playlist file.

Note that with the information processing device, the timing at which the mark management information is recorded in the maker's information (MakersInformation) region in increments of playlist marks of the playlist file is, specifically, the timing at which a new (PLM (= EM)) is set for example, and is the time of executing data recording processing or executing editing processing, for example. The information processing device which performs data recording or data editing performs updating processing of database files following the AVCHD format in accordance with data recording and editing, and also executes processing for recording the mark management information in the maker's information (MakersInformation) region in increments of playlist marks of the playlist file, under control of the recording/playback control unit 110 (see Fig. 2) which performs data recording processing control as to the information recordings medium.

For example, the recording/playback control unit 110 of the information processing device 100 shown in Fig. 2 performs recording of encoded data in which is set GOPs (Group Of Picture) (= EM) configured of picture groups and recording control of management information corresponding to the recorded data, and also performs control for recording the above-described playback start point information corresponding to marks i.e., PLM (= EM), that is management information including, as mark management information,
GOP attributes, indicating whether or not a GOP including the mark is a GOP needing decoding information of another GOP at the time of decoding processing of the GOP, and
playback specification point-in-time (PTS: presentation time stamp) information of the referenced picture included in the GOP to which the mark belongs,
in the maker's information (MakersInformation) region in increments of playlist marks of the playlist file,
in the AVCHD recording format.

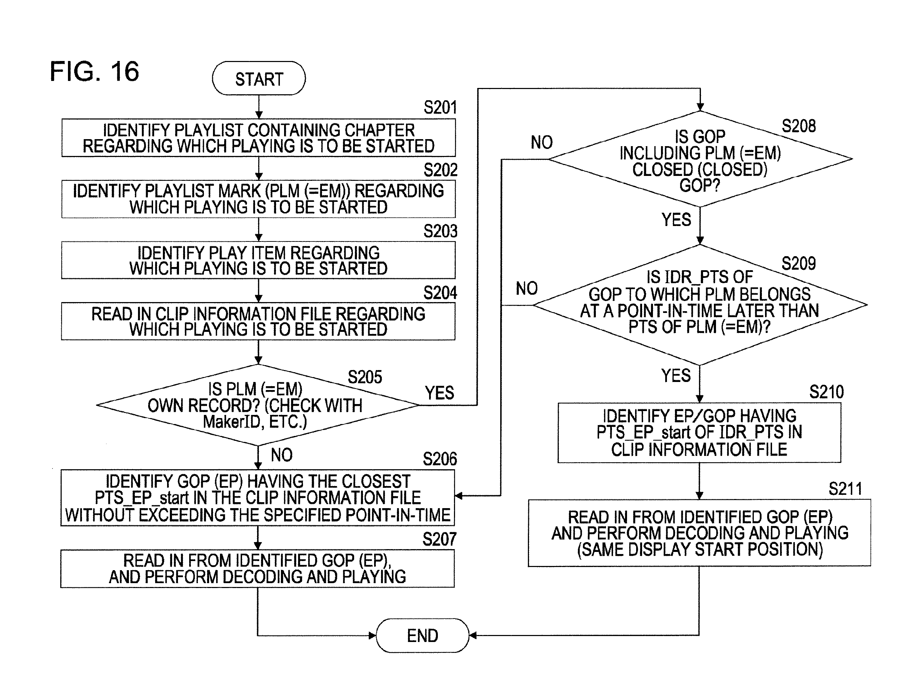

Next, a playback processing sequence in a case of applying this mark management information will be described with reference to the flowchart shown in Fig. 16. The processing flow shown in Fig. 16 is a flow for describing the processing sequence executed at the playback device at the time of playing data recorded in the AVCHD format from a picture identified by a playlist mark (PLM) (= EM: entry mark), and is a flow for describing a sequence including the various types of state determining processing executed at the playback device and processing to which is applied the above-described mark management information that is executed according to the state.

The processing in steps S201 through S204 is processing equivalent to the steps S101 through S104 in the flow described earlier with reference to Fig. 12. First, in step S201, the playlist containing the chapter regarding which playback is to be started is identified. As described earlier, playlists are provided corresponding to titles to be shown to the user, and are playback lists configured of at least one or more play items. Each play item has the playback section thereof specified by having a playback start point (IN point) and playback end point (OUT point) as to the clip.

In step S202, a playlist mark serving as the playback start point is identified. A playlist mark (PLM) (= EM) is assigned to the head of the play item, and in step S202, the playlist mark (PLM) (= EM) corresponding to the playback start point is identified. Note that at this point in time, the PTS (presentation time stamp) serving as start specification point-in-time set corresponding to the playlist mark (PLM) is obtained.

Next, in step S203, a play item for starting playback is identified. A play item is playback section specification information having a playback start point (IN point) and playback end point (OUT point) corresponding to the clip, and can be obtained from the playlist file.

Next, in step S204, a clip information file including the playback start point is read in. The clip information file name corresponding to the play item identified in step S204 can be obtained from the playlist file, and the clip information file is read in following the obtained clip information file name.

Next, in step S205, determination is made regarding whether the PLM (= EM) which is specification information of the playback start picture obtained in step S202 is a PLM set by own recording, or a PLM set at another device. This determination processing can be determined based on the maker ID information in the playlist file from which the PLM was obtained, for example.

In step S205, in the event that determination is made that the PLM (= EM) which is a playback start point has not been set by own recording, the flow proceeds to step S206, where reading of information recorded in the clip information file obtained in step S204 is executed, and the GOP (EP) having the playback time (PTS_EP_start) closest to the playback specification point-in-time (PTS: presentation time stamp) corresponding to the picture at the playback start point without exceeding this is identified. Note that the playback time (PTS_EP_start) corresponding to the GOP (EP) is registered in the EP map as described above, and presentation time stamp (PTS) information corresponding to the referenced picture IDR (I) included in each GOP (EP) is registered in the EP map, and from this information is identified the GOP (EP) having the playback time (PTS_EP_start) closest to the playback specification point-in-time (PTS: presentation time stamp) corresponding to the picture at the playback start point without exceeding this.

Subsequently, in step S207, reading is performed from the identified GOP (EP), and decoding and playback is performed. This processing is the same as the processing described with reference to Fig. 12. That is to say, identification processing of the preceding GOP described earlier with reference to Fig. 1, and decoding and playing from the identified GOP, is performed.

On the other hand, in the event that determination is made in step S205 that the playback start point PLM (= EM) has been set by own recording, the flow proceeds to step S208. The processing from step S208 on is the processing to which is applied the mark management information recorded in the maker's information (MakersInformation) region in increments of playlist marks of the playlist file.

Basically, in the event that the PLM serving as the playback start point is an own record, processing applying the mark management information recorded in the region in increments of playlist marks of the playlist file is executed.

In step S208, first, determination is made from the mark management information regarding whether or not the GOP to which the PLM belongs is a closed (CLOSED) GOP. As described above, GOP attribute information [GOP_ATTR], serving as information regarding whether or not the GOP including the playlist mark (PLM (= EM)) which can be specified as a playback start position is a closed (CLOSED) GOP which does not need to reference data of another GOP, stores the following three types of GOP attribute values;
00: GOP attribute is unknown
01: GOP is CLOSED GOP
02: GOP is not CLOSED GOP.

In step S208, the playback processing device (player) confirms this GOP attribute. In the event that the GOP is a closed (CLOSED) GOP, i.e., in the event that the GOP attribute information [GOP_ATTR] = [01] in the above code setting example, the flow proceeds to step S209.

In the event that the GOP is not a closed (CLOSED) GOP, i.e., in the event that the GOP attribute information [GOP_ATTR] = [00] or[02] in the above code setting example, the flow proceeds to step S206. Steps S206 and S207 are as described above, with the preceding GOP identification processing, and decoding and playing from the identified GOP being performed. In the event that the GOP is not a closed (CLOSED) GOP, determination is made that information of a GOP preceding the PLM which is the playback start point is needed, so reading and decoding is executed from this preceding GOP.

On the other hand, in the event that determination is made in step S208 that the GOP is a closed (CLOSED) GOP, in step S209 the IDR (I) picture PTS (presentation time stamp) information [IDR_PTS] is further obtained from the above-described mark management information, and comparison is made between the PTS (presentation time stamp) serving as the playback specification point-in-time of the playlist mark (PLM (= EM)) which is the playback start position, and the PTS (presentation time stamp) serving as the playback specification point-in-time of the IDR (I) picture which is a reference picture of the GOP in which the playlist mark (PLM (= EM)) is included.

In the event that the PTS corresponding to the IDR (I) picture is of a point-in-time later than the PTS corresponding to the PLM, the flow proceeds to step S210. On the other hand, in the event that the PTS corresponding to the IDR (I) picture is not of a point-in-time later than the PTS corresponding to the PLM, the processing of steps S206 and S207 is executed.

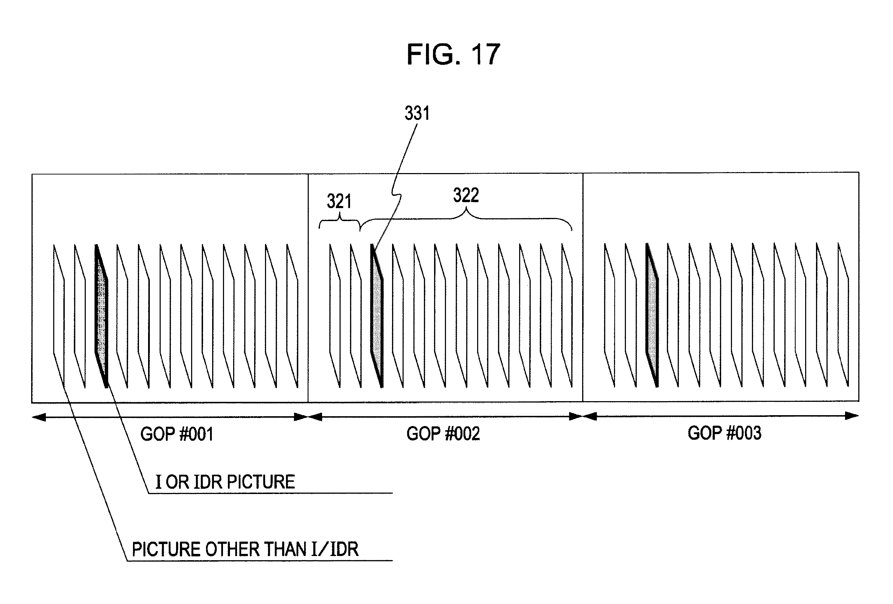

The sorting of processing in step S209 will be described with reference to Fig. 17. For example, in Fig. 17, in the event that the GOP #002 is a closed (CLOSED) GOP, there is a case wherein the PLM serving as the playback start point is a picture 321 preceding the IDR (I) picture 331 shown in Fig. 17, and a case wherein this is a picture 322 in a following region including the IDR (I) picture 331.

A case wherein the PTS corresponding to the IDR (I) picture is of a point-in-time later than the PTS corresponding to the PLM is a case wherein the PLM serving as the playback start point is a picture 321 shown in Fig. 17. On the other hand, case wherein the PTS corresponding to the IDR (I) picture is not of a point-in-time later than the PTS corresponding to the PLM is a case wherein the PLM serving as the playback start point is a picture 322 shown in Fig. 17.

In the event that a picture 322 shown in Fig. 17 is to be set as the PLM serving as the playback start point, in step S206, the GOP (EP) having the playback time (PTS_EP_start) closest to the playback specification point-in-time (PTS: presentation time stamp) corresponding to the picture at the playback start point without exceeding this is identified. In this case, the GOP (EP) having the playback time (PTS_EP_start) closest to the playback specification point-in-time (PTS) of the picture 322 at the playback start point without exceeding this is the GOP #002 in which the PTS of the IDR (I) picture 331 has been registered, so in step S207, decoding and playback is executed starting from the GOP #002.

On the other hand, a case wherein the PTS corresponding to the IDR (I) picture is of a point-in-time later than the PTS corresponding to the PLM is a case wherein the PLM serving as the playback start point is a picture 321 shown in Fig. 17, in which case the flow proceeds to step S210, the GOP (EP) having the playback time (PTS_EP_start) of the IDR (I) picture which is the referenced picture is identified, based on the clip information file obtained in step S204.

Note that recorded in the clip information file is the playback time (PTS_EP_start) of the IDR (I) picture which is the first referenced picture in the playback section (chapter) handled by that clip information, and the playback device (player) obtains an address within the file regarding the playback position by referring to the CPI of the clip information file based on the playback specification point-in-time (PTS), and identifies the GOP (EP) having a particular PTS.

Next, in step S211, decoding and playback from the GOP (EP) identified in step S210 is executed. This processing is equivalent to the case wherein the PLM serving as the playback start point is a picture 321 preceding the IDR (I) picture 331 shown in Fig. 17 in the event that the GOP #002 is a closed (CLOSED) GOP in Fig. 17.

In step S210, the playback time (PTS_EP_start) of the IDR (I) picture which is the first referenced picture in the playback section (chapter) handled by the clip information is obtained from the clip information file, and in step S210, the PTS is obtained and the GOP #002 is identified as the GOP (EP) having this PTS. In step S211, decoding and playback from the GOP #002 is executed.

The processing of steps S210 and S211 is executed as processing in the case of satisfying the conditions (a) and (b) :
(a) the GOP in which the playlist mark (PLM (= EM)) serving as the playback start point is included is a closed (CLOSED) GOP which does not need to reference another GOP for decoding, and
(b) the PTS corresponding to the GOP in which the playlist mark (PLM (= EM)) serving as the playback start point is included (PTS corresponding to IDR) is at a point-in-time later than the PTS corresponding to the PLM.

In this case, with the conventional processing (see Fig. 12), the GOP one earlier had been taken as the GOP for starting decoding processing, and as a result executing unnecessary decoding processing, but with the processing flow shown in Fig. 16, such unnecessary decoding processing does not occur, and speedy decoding and playback starting can be performed.

With the flow shown in Fig. 16, an example has been described wherein elimination of unnecessary decoding in playback processing can be realized by applying the above-described mark management information, but as described earlier, the problem at the time of editing data recorded in an information recording medium can also be solved by applying the mark management information. That is to say, as described earlier for example, in the stream shown in Fig. 14, in the event of dividing the stream at the position of the entry mark (EM) and deleting the first half, there is no guarantee that the picture can be played unless the stream up to the IDR (I) is left, so conventionally, processing had been performed for leaving the stream up to the IDR (I) before the entry mark (EM) picture, but performing editing processing referring to the above-described mark management information enables data editing without leaving such unnecessary data.

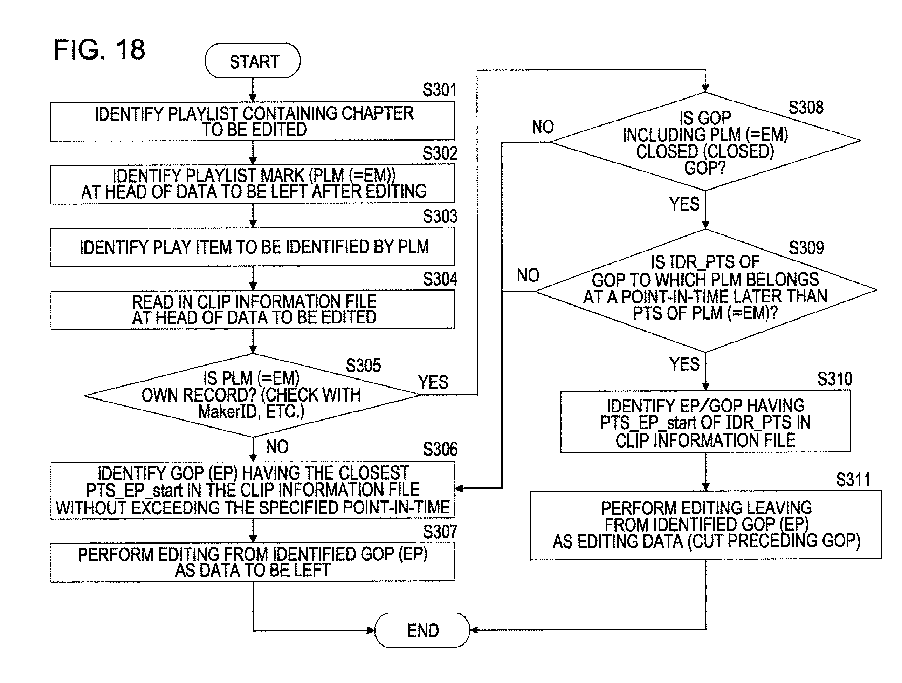

An editing processing sequence with no waste, to which the mark management information has been applied, will be described with reference to the flowchart shown in Fig. 18.

First, in step S301, the playlist in which the chapter to be edited is included is identified. In step S302, the playlist mark (PLM) at the head of the data to be left following editing is identified. That is to say, the playlist mark (PLM) (= EM) at the head of the data to be left following editing is identified based on the playlist. Note that at this point in time, the PTS (presentation time stamp) serving as start specification point-in-time set corresponding to the playlist mark (PLM) is obtained.

Next, in step S303, a play item corresponding to the playlist mark (PLM) is identified, and in step S304, a clip information file including the playback start point is read in. The clip information file name corresponding to the play item identified in step S304 can be obtained from the playlist file, and the clip information file is read in following the obtained clip information file name.

Next, in step S305, determination is made regarding whether the PLM (= EM) the head of the data to be left following editing, obtained in step S302, is a PLM set by own recording, or a PLM set at another device. This determination processing can be determined based on the maker ID information in the playlist file from which the PLM was obtained, for example.

In step S305, in the event that determination is made that the PLM (= EM) of the head of the data to be left following editing has not been set by own recording, the flow proceeds to step S306, where reading of information recorded in the clip information file obtained in step S304 is executed, and the GOP (EP) having the playback time (PTS_EP_start) closest to the playback specification point-in-time (PTS: presentation time stamp) corresponding to the picture at the head of the data to be left following editing without exceeding this is identified. Note that the playback time (PTS_EP_start) corresponding to the GOP (EP) is registered in the EP map as described above, and is presentation time stamp (PTS) information corresponding to the referenced picture IDR (I) included in each GOP (EP). Subsequently, in step S307, editing is performed for data to be left from the identified GOP (EP).

On the other hand, in the event that determination is made in step S305 that the PLM (= EM) at the head of the data to be left after editing has been set by own recording, the flow proceeds to step S308. The processing from step S308 on is the processing to which is applied the mark management information recorded in the maker's information (MakersInformation) region in increments of playlist marks of the playlist file.

Basically, in the event that the PLM serving as the head of the data to be edited is an own record, processing applying the mark management information recorded in the region in increments of playlist marks of the playlist file is executed.

In step S308, first, determination is made from the mark management information regarding whether or not the GOP to which the PLM belongs is a closed (CLOSED) GOP. As described above, GOP attribute information [GOP_ATTR], serving as information regarding whether or not the GOP including the playlist mark (PLM (= EM)) which can be specified as a playback start position is a closed (CLOSED) GOP which does not need to reference data of another GOP, stores the following three types of GOP attribute values;
- 00:: GOP attribute is unknown
- 01:: GOP is CLOSED GOP
- 02:: GOP is not CLOSED GOP.

In step S308, the device performing editing confirms this GOP attribute. In the event that the GOP is a closed (CLOSED) GOP, i.e., in the event that the GOP attribute information [GOP_ATTR] = [01] in the above code setting example, the flow proceeds to step S309.

In the event that the GOP is not a closed (CLOSED) GOP, i.e., in the event that the GOP attribute information [GOP_ATTR] = [00] or[02] in the above code setting example, the flow proceeds to step S306. Steps S306 and S307 are processing as described above, with the preceding GOP identification processing, and editing, wherein from the identified GOP is set as remaining data, being performed. In the event that the GOP is not a closed (CLOSED) GOP, determination is made that information of a GOP preceding the PLM which is the head of the data to be left after editing, may be necessary at the time of playback, and editing is executed wherein this preceding GOP is not cut out but left.

On the other hand, in the event that determination is made in step S308 that the GOP is a closed (CLOSED) GOP, in step S309 the IDR (I) picture PTS (presentation time stamp) information [IDR_PTS] is further obtained from the above-described mark management information, and comparison is made between the PTS (presentation time stamp) serving as the playback specification point-in-time of the playlist mark (PLM (= EM)) which is the playback start position, and the PTS (presentation time stamp) serving as the playback specification point-in-time of the IDR (I) picture which is a reference picture of the GOP in which the playlist mark (PLM (= EM)) is included.

In the event that the PTS corresponding to the IDR (I) picture is of a point-in-time later than the PTS corresponding to the PLM, the flow proceeds to step S310. On the other hand, in the event that the PTS corresponding to the IDR (I) picture is not of a point-in-time later than the PTS corresponding to the PLM, the processing of steps S306 and S307 is executed.

The sorting of processing in step S309 will be described with reference to Fig. 17. In the event that the PTS of the IDR (I) picture is a point-in-time later than the PTS corresponding to the PLM, the flow proceeds to step S310, and the GOP (EP) having the playback time (PTS_EP_start) of the IDR (I) which is the referenced picture is identified, based on the clip information file obtained in step S304.

Next, in step S311, from the GOP (EP) identified in step S310 is left as edited data, and the preceding GOP data is determined to be unnecessary for playback processing and is cut. This processing is equivalent to the case wherein the PLM serving as the remaining data start point is a picture 321 preceding the IDR (I) picture 331 shown in Fig. 17 in the event that the GOP #002 is a closed (CLOSED) GOP in Fig. 17, for example, and editing is performed cutting the preceding GOP based on the determination that the preceding GOP (GOP #001) is unnecessary.

That is to say, The processing of steps S310 and S311 is executed as processing in the case of satisfying the conditions (a) and (b):
(a) the GOP in which the playlist mark (PLM (= EM)) serving as the start point of data left by editing is included is a closed (CLOSED) GOP which does not need to reference another GOP for decoding, and
(b) the PTS corresponding to the GOP in which the playlist mark (PLM (= EM)) serving as the start point of data left by editing is included (PTS corresponding to IDR) is at a point-in-time later than the PTS corresponding to the PLM.

In this case, with the conventional processing (see Fig. 12), determination of whether or not the GOP one earlier is necessary for decoding of the picture at the start point of leaving data by editing was impossible, so editing processing wherein this GOP one earlier is left had been performed, but with the processing flow shown in Fig. 18, editing processing can be performed leaving only necessary data, without performing editing leaving such unnecessary data.

As described above, under control of the recording/playback control unit 110 of the information processing device 100 shown in Fig. 2 for example, the information processing device according to the present invention which performs control of playback or editing processing of data recorded in an information recording medium reads a encoded data in which is set GOPs (Group Of Picture) configured of picture groups from the information recording medium, and performs playback or editing processing, at which time mark management information corresponding to a mark (PLM (EM)) serving as playback start point information is read out from the maker's information (MakersInformation) region in increments of playlist marks of the playlist file stipulated in the AVCHD format, GOP attributes indicating whether or not a GOP including the mark is a GOP needing decoding information of another GOP at the time of decoding processing of the GOP are confirmed based on the mark management information, and a decoding start point in playback processing or a leaving start point in editing processing is determined.

Further, the recording/playback control unit 110 obtains, from the mark management information, the playback specification point-in-time (PTS: presentation time stamp) of the referenced picture included in the GOP to which the mark belongs, and based on the comparison results as to the playback specification point-in-time (PTS) of the picture corresponding to the mark, executes processing for determining the decoding start point in playback processing or leaving start point in editing processing.

According to these processing, speedy playback without performing unnecessary decoding is realized in playback processing, and further editing processing can be performed leaving only necessary data without performing editing leaving unnecessary data.

### (3-2) Embodiment of Recording Mark Management Information in a Maker's Private Data (MakersPrivateData) Region in Clip Information File

Next, an embodiment wherein information, such as whether a GOP (EP) is a closed (CLOSED) GOP which does not need to reference data of another GOP at the time of decoding, is recorded in a maker's private data (MakersPrivateData) region in a clip information file will be described.

As described earlier with reference to Fig. 3 through Fig. 7, with the AVCHD format, files which are index (index), movie object (MovieObject), play list (PlayList), clip information (ClipInformation), and clip AV stream (CLipAVStream) are generated and recorded.

Clip information files exist in pairs with clip AV stream files, and are files in which are described information relating to a stream necessary for playing an actual stream.

With the present embodiment, mark management information applicable to eliminating unnecessary decoding in playback and occurrence of unnecessary data in editing is recorded in the maker's private data (MakersPrivateData) region in a clip information file.

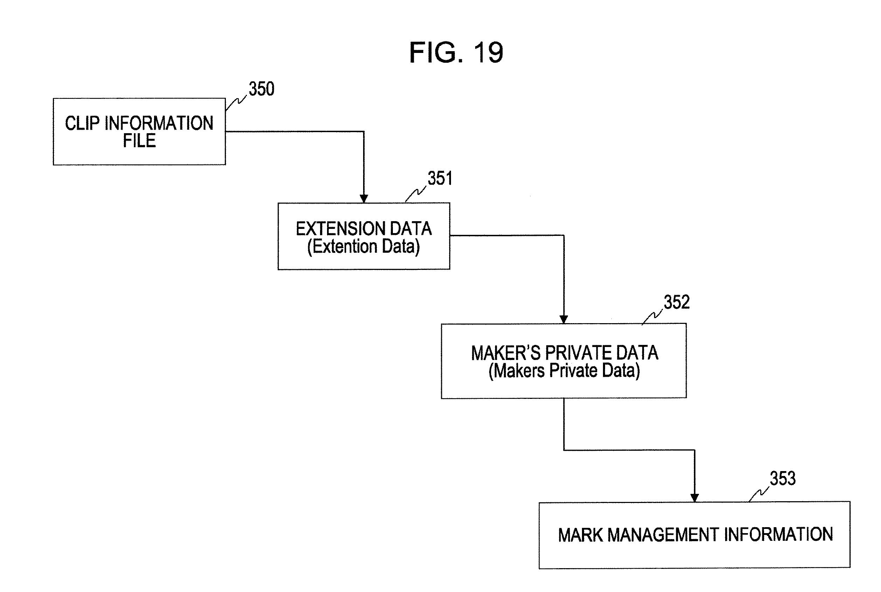

A mark management information write region in a clip information file will be described with reference to Fig. 19. As shown in Fig. 19, a clip information file 350 stores an extension data region (ExtentionData) 351, a maker's private data (Makers PriVate Data) 352 region is set in the extension data region (ExtentionData) 351. This maker's private data region is a region set as a region where the maker of the data recording device which performs data recording processing is permitted to freely write information.

The above-described mark management information 353, i.e., the mark management information 353 applicable in eliminating unnecessary decoding in playback and occurrence of unnecessary data in editing, is recorded in this maker's private data 352.

Examples of mark management information to be recorded in the maker's private data (MakersPrivateData) region of a clip information file are shown below.

**Table 3**

| Data size | Name of variable | Meaning |
|---|---|---|
| 80 bit | ID_STR | Text string for confirming that MakersPrivateData has been recorded by self For example, "ABC_CAMERA" or the like is stored in ASCII code |
| 8 bit | GOP_ATTR | Attribute value indicating whether GOP including point-in-time of ClipInformation is a CLOSED GOP 00: GOP attribute is unknown 01: GOP is CLOSED GOP 02: GOP is not CLOSED GOP 03: Mixed CLOSED and not CLOSED GOPs |
| 32 bit | IDR_PTS_OFFSET | Time offset value from head of GOP to PTS of I/IDR [45 kHz] FFFFFFFFh is listed if unknown or mixed |

As shown in the table above, mark management information in this embodiment includes
ID text string [ID_STR],
GOP attribute information [GOP_ATTR], and
IDR PTS offset information [IDR_PTS_OFFSET].

The ID text string [ID_STR] is a text string indicating that the information recorded in the maker's private data region in the clip information file is data of its own recording, with "ABC_CAMERA" or the like being stored in ASCII code, as information of 80 bits or smaller, for example.
Note that a recording region for the maker's ID serving as recording information following the AVCHD format is set in the maker's private data region set in the clip information file, so configurations may be made applying information following this format, and in this case, the ID text string [ID_STR] can be omitted.

The GOP attribute information [GOP_ATTR] is the same as with the previous embodiment, and is information regarding whether or not the GOP including the playlist mark (PLM (= EM)) which can be specified as a playback start position is a CLOSED GOP which does not need to reference data of another GOP. The following four types of GOP attribute values, for example, are stored as information of 8 bits or smaller;
00: GOP attribute is unknown
01: GOP is CLOSED GOP
02: GOP is not CLOSED GOP
03: Mixed closed (CLOSED) GOPs and not CLOSED GOPs

With the processing example (3-1) Embodiment of Recording Mark Management Information in a Maker's Information (MakersInformation) Region in Increments of Playlist Marks in a Playlist File described earlier, this is mark management information in increments of playlist marks, including information of only one GOP, but with the present processing example, this is information obtained from clip information, and information relating to multiple GOPs is described in the clip information in many cases, with the above code [03] being added.

The IDR PTS offset information [IDR_PTS_OFFSET] is time difference value [45 kHz] information of the PTS serving as the playback specification point-in-time of the IDR (I) picture which is the referenced picture included in the GOP, as to the PTS serving as the playback specification point-in-time of the head picture of the GOP.

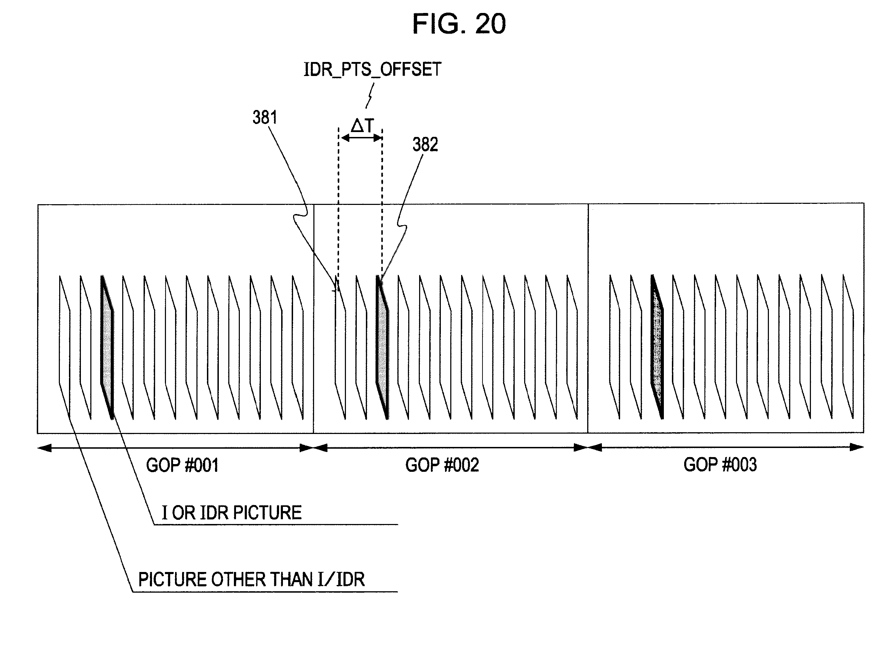

The IDR PTS offset information will be described with reference to Fig. 20. Description will be made by way of example of the GOP #002 shown in Fig. 20. With the GOP #002, the head picture of the GOP is picture 381. The IDR (I) picture which is the referenced picture included in the GOP #002 is the IDR (I) picture 382. The IDR PTS offset information [IDR_PTS_OFFSET] is a time difference value [ΔT] of the PTS serving as the playback specification point-in-time of the IDR (I) picture 382 which is the referenced picture included in the GOP, as to the PTS serving as the playback specification point-in-time of the head picture 381 of the GOP.

As described above, the three information of
ID text string [ID_STR],
GOP attribute information [GOP_ATTR], and
IDR PTS offset information [IDR_PTS_OFFSET]
are recorded in the maker's private data (MakersPrivateData) region in the clip information file.

Note that with the information processing device, the timing at which the mark management information is recorded in the maker's private data (MakersPrivateData) region in the clip information file is, specifically, the timing at which a new (PLM (= EM)) is set for example, and is the time of executing data recording processing or executing editing processing, for example. The information processing device which performs data recording or data editing performs updating processing of database files following the AVCHD format in accordance with data recording and editing, and also executes processing for recording the mark management information in the maker's private data (MakersPrivateData) region in the clip information file, under control of the recording/playback control unit 110 (see Fig. 2) which performs data recording processing control as to the information recordings medium.

For example, the recording/playback control unit 110 of the information processing device 100 shown in Fig. 2 performs recording of encoded data in which is set GOPs (Group Of Picture) configured of picture groups and recording control of management information corresponding to the recorded data, and also performs control for recording the above-described playback start point information corresponding to marks i.e., PLM (= EM), that is management information including, as mark management information,
device information which has executed the recording processing,
GOP attributes, indicating whether or not a GOP including the mark is a GOP needing decoding information of another GOP at the time of decoding processing of the GOP, and
difference value information between the playback specification point-in-times (PTS: presentation time stamp) of the head picture of the GOP to which the mark belongs and the referenced picture included in the GOP,
in the maker's private data region in the clip information file stipulated in the AVCHD recording format.

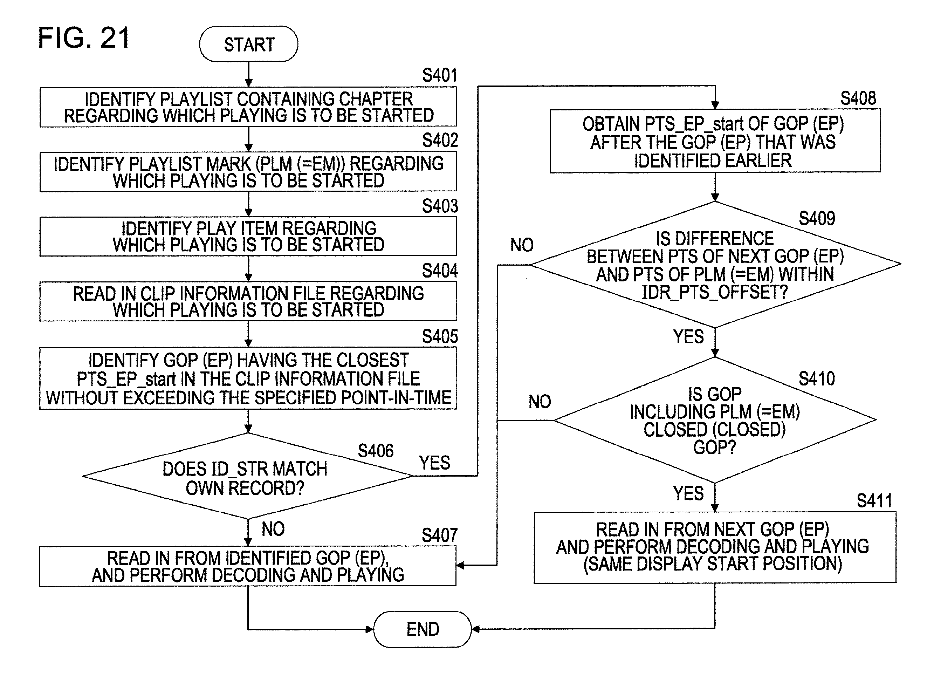

Next, a playback processing sequence in a case of applying this mark management information will be described with reference to the flowchart shown in Fig. 21. The processing flow shown in Fig. 16 is a flow for describing the processing sequence executed at the playback device at the time of playing data recorded in the AVCHD format from a picture identified by a playlist mark (PLM) (= EM: entry mark), and is a flow for describing a sequence including the various types of state determining processing executed at the playback device and processing to which is applied the above-described mark management information that is executed according to the state.

The processing in steps S401 through S404 is processing equivalent to the steps S201 through S204 in the flow described earlier with reference to Fig. 16. First, in step S401, the playlist containing the chapter regarding which playback is to be started is identified. As described earlier, playlists are provided corresponding to titles to be shown to the user, and are playback lists configured of at least one or more play items. Each play item has the playback section thereof specified by having a playback start point (IN point) and playback end point (OUT point) as to the clip.

In step S402, a playlist mark serving as the playback start point is identified. A playlist mark (PLM) (= EM) is assigned to the head of the play item, and in step S402, the playlist mark (PLM) (= EM) corresponding to the playback start point is identified. Note that at this point in time, the PTS (presentation time stamp) serving as start specification point-in-time set corresponding to the playlist mark (PLM) is obtained.

Next, in step S403, a play item for starting playback is identified. A play item is playback section specification information having a playback start point (IN point) and playback end point (OUT point) corresponding to the clip, and can be obtained from the playlist file.

Next, in step S404, a clip information file including the playback start point is read in. The clip information file name corresponding to the play item identified in step S404 can be obtained from the playlist file, and the clip information file is read in following the obtained clip information file name.

Next, in step S405, reading of information recorded in the clip information file obtained in step S404 is executed, and the GOP (EP) having the playback time (PTS_EP_start) closest to the playback specification point-in-time (PTS: presentation time stamp) corresponding to the picture at the playback start point without exceeding this is identified. Note that the playback time (PTS_EP_start) corresponding to the GOP (EP) is registered in the EP map as described above, and presentation time stamp (PTS) information corresponding to the referenced picture IDR (I) included in each GOP (EP) is registered in the EP map, and from this information is identified the GOP (EP) having the playback time (PTS_EP_start) closest to the playback specification point-in-time (PTS: presentation time stamp) corresponding to the picture at the playback start point without exceeding this.

Next, in step S406, mark management information recorded in the maker's private data region of the clip information file described above is read, and determination is made regarding whether or not there is recorded a text string indicating recorded data by a device matching the playback device, i.e., indicating own recorded data, as the ID text string [ID_STR].

In the event that confirmation is made in step S406 that this is an own recording, the flow proceeds to step S408, and in the event that confirmation is made in step S406 that this is not an own recording, the flow proceeds to step S407. In step S407 reading is performed from the GOP (EP) identified in step S405, and decoding and playback is performed. This processing is the same as the processing described with reference to Fig. 12. That is to say, identification processing of the preceding GOP described earlier with reference to Fig. 1, and decoding and playing from the identified GOP, is performed.

With this processing example as well, only in the event that the mark management information recorded in the maker's private data region of the clip information file is data recorded by the device itself, is changing of the decoding position executed based on the mark management information.

Now, as described earlier, a maker's ID recording region is set in the maker's private data set in the clip information file, as recording information following the AVCHD format, so the determination processing in step S406 may be executed as determination processing applying information following this format.

In the event that confirmation is made in step S406 that this is an own recording, the flow proceeds to step S408, and processing applying the mark management information recorded in the maker's private data set in the clip information file described above is performed. In step S408, the playback time (PTS_EP_start) of the GOP (EP) following the GOP (EP) identified in step S405 is obtained. Next, in step S409, the difference Δt between the playback time (PTS_EP_start) of the GOP (EP) obtained in step S408 and the playback start time (PTS) of the PLM (EM) which is the playback start point is calculated, and determination is made regarding whether or not the calculated difference Δt is equal to or smaller than the IDR PTS offset information [IDR_PTS_OFFSET] registered as the mark management information described above.

In the event that the difference Δt between the PTS corresponding to the PLM and the PTS corresponding to the next GOP (EP) is equal to or smaller than the IDR PTS offset information [IDR_PTS_OFFSET], the flow proceeds to step S410, and if not equal to or smaller than the IDR PTS offset information [IDR_PTS_OFFSET], the flow proceeds to step S407.

In step S407, decoding is performed from the GOP, identified in step S405, i.e., the preceding GOP (EP) having a playback time preceding the playback start point.

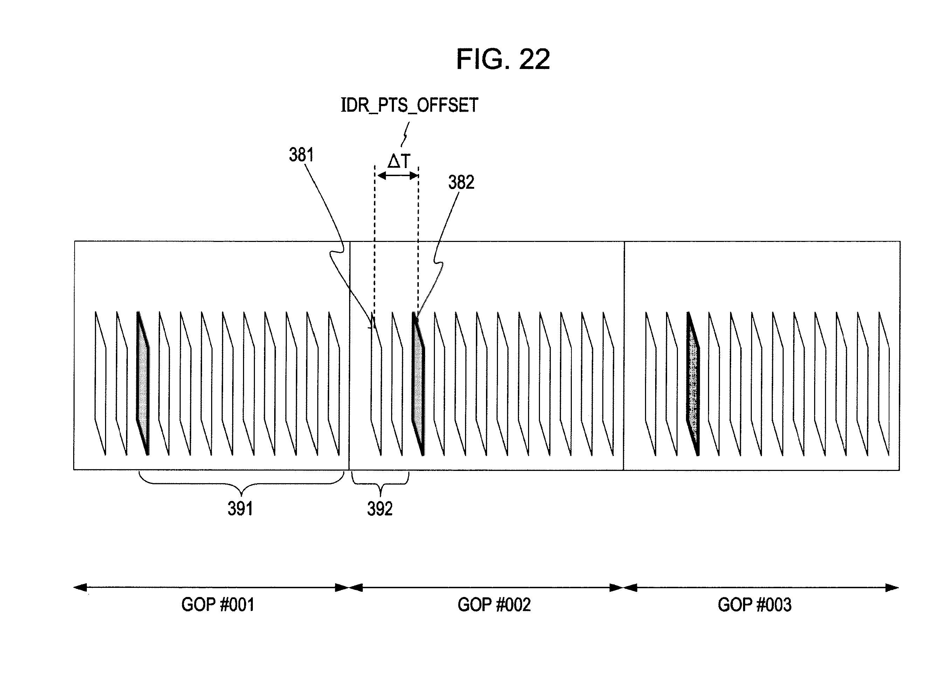

The determination processing in step S409 will be described with reference to Fig. 22. The processing in step S409 is executed as determination processing for distinguishing between the picture group 391 and picture group 392 and switching processing, in the event that the PLM (EM) is in the range of picture groups 391 to 392 in Fig. 22.

In step S409, determination is made regarding whether or not the difference Δt between the PTS corresponding to the PLM which is the picture specification information of the playback start point and the PTS corresponding to the next GOP (EP) is equal to or smaller than the IDR PTS offset information [IDR_PTS_OFFSET],
wherein a case in which the difference Δt between the PTS corresponding to the PLM and the PTS corresponding to the next GOP (EP) is equal to or smaller than the IDR PTS offset information [IDR_PTS_OFFSET] is a case wherein the picture corresponding to the PLM which is specification information of the playback start picture is included in the picture group 392 shown in Fig. 22,
and wherein a case in which the difference Δt between the PTS corresponding to the PLM and the PTS corresponding to the next GOP (EP) is not equal to or smaller than the IDR PTS offset information [IDR_PTS_OFFSET] is a case wherein the picture corresponding to the PLM which is specification information of the playback start picture is included in the picture group 391 shown in Fig. 22.

In the event that the picture group 391 shown in Fig. 22 is pictures corresponding to the PLM which is specification information of the playback start picture, the GOP #001 including the IDR (I) picture preceding these pictures has been identified in step S405, and decoding from this GOP is executed in step S407 and playback is performed.

On the other hand, in the event that the picture group 392 shown in Fig. 22 is pictures corresponding to the PLM which is specification information of the playback start picture, the GOP #001 including the IDR (I) picture preceding these pictures may not need to be decoded to play the picture group 392. That is to say, in the event that the GOP #002 is a closed (CLOSE) GOP, there is no need to decode the GOP #001.

Accordingly, whether or not the GOP #002 is closed is determined in step S410. In step S410, whether or not the GOP (EP), in which is included the PLM which is specification information of the playback start picture, is a GOP (EP) decodable without using data of another GOP, is determined with reference to the mark management information described earlier.

That is to say, determination is made from the mark management information regarding whether or not the GOP to which the PLM belongs is a closed (CLOSED) GOP. As described above, GOP attribute information [GOP_ATTR], serving as information regarding whether or not the GOP including the playlist mark (PLM (= EM)) which can be specified as a playback start position is a closed (CLOSED) GOP which does not need to reference data of another GOP, stores the following four types of GOP attribute values;
00: GOP attribute is unknown
01: GOP is CLOSED GOP
02: GOP is not CLOSED GOP.
03: Mixed closed (CLOSED) GOPs and not CLOSED GOPs

In step S410, the playback processing device (player) confirms this GOP attribute. In the event that the GOP is a closed (CLOSED) GOP, i.e., in the event that the GOP attribute information [GOP_ATTR] = [01] in the above code setting example, the flow proceeds to step S411.

In the event that the GOP is not a closed (CLOSED) GOP, i.e., in the event that the GOP attribute information [GOP_ATTR] = [00] or [02] or [03] in the above code setting example, the flow proceeds to step S407. Step S407, as described above, performs decoding from the GOP identified in step S405, i.e., from the GOP having a PTS preceding the PTS of the picture corresponding to the PLM which is playback start picture specification information.

These processing will be described with reference to Fig. 22. The processing which proceeds from step S410 to step S407 and is executed is equivalent to processing wherein a PLM which is playback start picture specification information is set to one of the picture group 392, and the GOP #001 is set as the decoding start GOP. In this case, this is processing based on determination that the GOP #002 is not a closed (CLOSED) GOP, and determination that decoded information of the referenced (IDR (I)) picture included in the GOP #001 is necessary for decoding of the picture group 392.

On the other hand, in the event that determination is made in step S410 that the GOP is a closed (CLOSED) GOP, the flow proceeds to step S411, and the set decoding and playback processing is executed with the next GOP identified in step S408 as the decoding start GOP.

The processing in this case will be described with reference to Fig. 22. The processing which proceeds from step S410 to step S411 and is executed is equivalent to processing wherein a PLM which is playback start picture specification information is set to one of the picture group 392, and the GOP #002 is set as the decoding start GOP. In this case, determination is made that the GOP #002 is a closed (CLOSED) GOP, and confirmation is made that decoded information of the referenced (IDR (I)) picture included in the GOP #001 is not necessary for decoding of the picture group 392, so in step S411, the set decoding and playback processing is executed with the next GOP identified in step S408 as the decoding start GOP.

That is, the processing of steps S409 through S411 is processing wherein the set decoding and playback processing is executed, with the next GOP identified in step S408 as the decoding start GOP, in the case of satisfying the conditions (a) and (b):
(a) the difference Δt between the playback time (PTS_EP_start) of a GOP (EP) for which a PTS has been set that is later than the PTS of the playlist mark (PLM (= EM)) serving as the playback start point, and the PTS corresponding to the PLM (EM), is equal to or smaller than the IDR PTS offset information [IDR_PTS_OFFSET], and
(b) the GOP in which the playlist mark (PLM (= EM)) serving as the playback start point is included is a closed (CLOSED) GOP which does not need to refer to data of another GOP at the time of decoding.

Thus, with this processing example as well, decoding of a GOP unnecessary for playback from the playback start point can be omitted based on the above-described mark management information, so delay in playback starting due to unnecessary processing is prevented, and speedy decoding an playback starting can be performed.

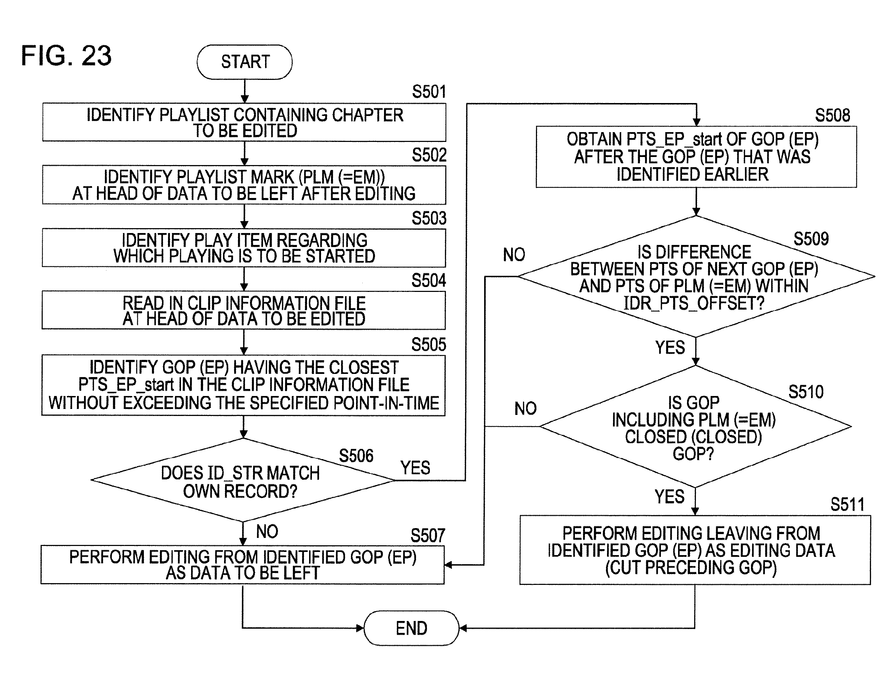

With the flow shown in Fig. 21, an example has been described wherein elimination of unnecessary decoding in playback processing can be realized by applying the above-described mark management information, but with this processing example as well, applying the above-described mark management information enables data editing without leaving unnecessary data at the time of editing data recorded in the information recording medium. An editing processing sequence with no waste, to which the mark management information has been applied, will be described with reference to the flowchart shown in Fig. 23.

First, in step S501, the playlist in which the chapter to be edited is included is identified. In step S502, the playlist mark (PLM) at the head of the data to be left following editing is identified. That is to say, the playlist mark (PLM) (= EM) at the head of the data to be left following editing is identified based on the playlist. Note that at this point in time, the PTS (presentation time stamp) serving as playback specification paint-in-time set corresponding to the playlist mark (PLM) is obtained.

Next, in step S503, a play item corresponding to the playlist mark (PLM) is identified, and in step S504, a clip information file including the playback start point corresponding to the identified play item is read in. The clip information file name corresponding to the play item identified in step S504 can be obtained from the playlist file, and the clip information file is read in following the obtained clip information file name.

Next, the flow proceeds to step S505, reading of information recorded in the clip information file obtained in step S504 is executed, and the GOP (EP) having the playback time (PTS_EP_start) closest to the playback specification point-in-time (PTS: presentation time stamp) corresponding to the head picture at the playback start point without exceeding this is identified. Note that the playback time (PTS_EP_start) corresponding to the GOP (EP) is registered in the EP map as described above, and is presentation time stamp (PTS) information corresponding to the referenced picture IDR (I) included in each GOP (EP).

Next, in step S506, mark management information recorded in the maker's private data region of the clip information file described above is read, and determination is made regarding whether or not there is recorded a text string indicating recorded data by a device matching the playback device, i.e., indicating own recorded data, as the ID text string [ID_STR].

In the event that confirmation is made in step S506 that this is an own recording, the flow proceeds to step S508, and in the event that confirmation is made that this is not an own recording, the flow proceeds to step S507. In step S507, editing is performed with data from the GOP (EP) identified in step S505 to be left

Now, as described earlier, a maker's ID recording region is set in the maker's private data set in the clip information file, as recording information following the AVCHD format, so the determination processing in step S506 may be executed as determination processing applying information following this format.

In the event that confirmation is made in step S506 that this is an own recording, the flow proceeds to step S508, and processing applying the mark management information recorded in the maker's private data set in the clip information file described above is performed. In step S508, the playback time (PTS_EP_start) of the GOP (EP) following the GOP (EP) identified in step S505 is obtained. Next, in step S509, the difference Δt between the playback time (PTS_EP_start) of the next GOP (EP) obtained in step S508 and the playback start time (PTS) of the PLM (EM) which is the playback start point is calculated, and determination is made regarding whether or not the calculated difference Δt is equal to or smaller than the IDR PTS offset information [IDR_PTS_OFFSET] registered as the mark management information described above.

In the event that the difference Δt between the PTS corresponding to the PLM and the PTS corresponding to the next GOP (EP) is equal to or smaller than the IDR PTS offset information [IDR_PTS_OFFSET], the flow proceeds to step S510, and if not equal to or smaller than the IDR PTS offset information [IDR_PTS_OFFSET], the flow proceeds to step S507.

In step S507, decoding is performed from the GOP, identified in step S505, i.e., the preceding GOP (EP) having a playback time preceding the playback start point.

The determination processing in step S509 will be described with reference to Fig. 22. In step S509, upon determination being made that the difference Δt between the PTS corresponding to the PLM and the PTS corresponding to the next GOP (EP) is equal to or smaller than the IDR PTS offset information [IDR_PTS_OFFSET], the flow proceeds to step S510, and in step S510, whether or not the GOP (EP), in which is included the PLM which is specification information of the playback start picture, is a GOP (EP) decodable without using data of another GOP, is determined with reference to the mark management information described earlier.

That is to say, determination is made from the mark management information regarding whether or not the GOP to which the PLM belongs is a closed (CLOSED) GOP. As described above, the mark management information recorded in the maker's private data region of the clip information file stores, as GOP attribute information [GOP_ATTR], information regarding whether or not the GOP including the playlist mark (PLM (= EM)) is a closed (CLOSED) GOP which does not need to reference data of another GOP at the time of decoding, i.e., the following four types of GOP attribute values;
00: GOP attribute is unknown
01: GOP is CLOSED GOP
02: GOP is not CLOSED GOP.
03: Mixed closed (CLOSED) GOPs and not CLOSED GOPs

In step S510, the device which executes editing processing confirms this GOP attribute. In the event that the GOP is a closed (CLOSED) GOP, i.e., in the event that the GOP attribute information [GOP_ATTR] = [01] in the above code setting example, the flow proceeds to step S511.

In the event that the GOP is not a closed (CLOSED) GOP, i.e., in the event that the GOP attribute information [GOP_ATTR] = [00] or [02] or [03] in the above code setting example, the flow proceeds to step S507. In step S507, editing processing is performed leaving the GOP identified in step S505, i.e., the GOP having the PTS preceding the PTS of the picture corresponding to the PLM which is the start point of the data to be left following editing.

On the other hand, in the event that determination is made in step S510 that the GOP is a closed (CLOSED) GOP, the flow proceeds to step S511, and editing processing is executed wherein the next GOP identified in step S508 is left, and the preceding GOP, i.e., the GOP (EP) identified in step S505 is cut.

This processing is equivalent to the case wherein the PLM serving as the remaining data start point following editing is included in the picture group 392 shown in Fig. 22 in the event that the GOP #002 is a closed (CLOSED) GOP in Fig. 22, and editing is performed cutting the preceding GOP based on the determination that the preceding GOP (GOP #001) is unnecessary at the time of playback of the pictures included in the picture group 392.

That is to say, the processing of steps S509 and S510 is executed as processing in the case of satisfying the conditions (a) and (b):
(a) the difference Δt between the playback time (PTS_EP_start) of a GOP (EP) for which a PTS has been set that is later than the PTS of the playlist mark (PLM (= EM)) serving as the start point of remaining data from editing, and the PTS corresponding to the PLM (EM), is equal to or smaller than the IDR PTS offset information [IDR_PTS_OFFSET] registered in the mark management information, and
(b) the GOP in which the playlist mark (PLM (= EM)) serving as the start point of remaining data from editing is included is a closed (CLOSED) GOP which does not need to refer to data of another GOP at the time of decoding.

In this case, with the conventional processing (see Fig. 12), determination of whether or not the GOP one earlier is necessary for decoding of the picture at the start point of leaving data by editing was impossible, so editing processing wherein this GOP one earlier is left had been performed, but with the processing flow shown in Fig. 22, editing processing can be performed leaving only necessary data, without performing editing leaving such unnecessary data.

As described above, under control of the recording/playback control unit 110 of the information processing device 100 shown in Fig. 2 for example, the information processing device according to the present invention which performs control of playback or editing processing of data recorded in an information recording medium reads a encoded data in which is set GOPs (Group Of Picture) configured of picture groups from the information recording medium, and performs playback or editing processing, at which time mark management information corresponding to a mark (PLM (EM)) serving as playback start point information is read out from the maker's private data (MakersPrivateData) region in the clip information file stipulated in the AVCHD format, GOP attributes indicating whether or not a GOP including the mark is a GOP needing decoding information of another GOP at the time of decoding processing of the GOP are confirmed based on the mark management information, and a decoding start point in playback processing or a leaving start point in editing processing is determined.

Further, the recording/playback control unit 110 obtains, from the mark management information, difference value information of point-in-time (PTS: presentation time stamp) between the head picture of the GOP to which the mark belongs to, and the referenced picture included in this GOP, and based on the comparison results of the difference between the mark-corresponding playback specification point-in-time (PTS) of the picture corresponding to the mark and the playback specification point-in-time (PTS) corresponding to the GOP after the mark-corresponding playback specification point-in-time, and the difference value information recorded in the mark management information, executes processing for determining the decoding start point in playback processing or leaving start point in editing processing. Also, device information which has executed the recording processing is obtained from the mark management information, and the processing form is changed based on the obtained device information.

According to these processing, speedy playback without performing unnecessary decoding is realized in playback processing, and further editing processing can be performed leaving only necessary data without performing editing leaving unnecessary data.

While the present invention has been described above in detail with reference to specific embodiments, it is self-evident that one skilled in the art can make modifications and substitutions of the embodiments without departing from the essence of the present invention. That is to say, the present invention has been disclosed exemplarily, and should not be interpreted restrictively. Determination of the essence of the present invention should be made taking into consideration the section of the Claims listed at the beginning.

Note that the series of processing described in the specification can be executed by hardware, or software, of a combined configuration of both. In the event of executing the processing with software, a program recording the processing sequence can be installed in memory in a computer built into dedicated hardware and executed, or a program can be installed in a general-purpose computer capable of executing various types of processing and executed.

For example, the program can be recorded beforehand in a hard disk or ROM (Read Only Memory) serving as a recording medium. Or, the program can be temporarily or permanently stored (recorded) in a removable recording medium such as a flexible disk, CD-ROM (Compact Disc Read Only Memory), MO (Magneto optical) disk, DVD (Digital Versatile Disc), magnetic disk, semiconductor memory, or the like. Such removable recording media can be provided as so-called packaged software.

Note that in addition to being installed from such above-described removable recording media to a computer, the program can be transferred to the computer from a download site wirelessly or to the computer by cable via a network such as a LAN (Local Area Network), the Internet, or the like, with the computer receiving the program being transferred in this way and installing in a recording medium such as a built-in hard disk or the like.

Note that in addition to the various types of processing described in the specification being executed in time-sequence following the description, these may be executed in parallel or individually, according to processing capabilities of the device executing the processing or as necessary. Also, system as used in the present specification is a logical group configuration of multiple devices, and is not restricted to each component device being within the same housing.

### Industrial Applicability

As described above, according to an embodiment of the present invention, in decoding/playback processing of data which has been encoded and compressed, unnecessary decoding processing is prevented so as to enable efficient playback, and in editing of recorded data, editing is enabled without leaving unnecessary data. Specifically, a configuration has been made wherein recording is performed of GOP attributes, as mark management information corresponding to a PLM (= EM) mark serving as playback start point information stipulated in the AVCD format, indicating whether or not a GOP including the mark is a GOP needing decoding information of another GOP at the time of decoding processing of the GOP, and playback and editing are performed referencing these information, thereby preventing decoding unnecessary in playback processing, and enabling editing without leaving data unnecessary in editing processing.

## Claims

1. An information processing device **characterized in** having a control unit for performing data recording processing control as to an information recording medium;
wherein said control unit is of a configuration for performing recording of encoded data in which GOPs (Group Of Pictures) configured of picture groups have been set, and recording control of management information corresponding to recorded data;
and wherein said control unit is of a configuration for performing recording processing control of GOP attributes, as mark management information corresponding to a mark serving as playback start point information, indicating whether or not a GOP including said mark is a GOP needing decoding information of another GOP at the time of decoding processing of said GOP.

2. The information processing device according to Claim 1, **characterized in** said control unit being of a configuration for performing control to record, as said mark management information, playback specification point-in-time (PTS: presentation time stamp) information of a referenced picture included in the GOP to which said mark belongs.

3. The information processing device according to Claim 1, **characterized in** said control unit being of a configuration for performing control to record, as said mark management information, difference information between the head picture of the GOP to which said mark belongs and the playback specification point-in-time (PTS: presentation time stamp) of a referenced picture included in the GOP to which said mark belongs.

4. The information processing device according to Claim 1, **characterized in** said control unit being of a configuration for performing control to record, as said mark management information, device information which has executed the recording processing.

5. The information processing device according to Claim 1, **characterized in** said control unit being of a configuration for performing data recording control following a data recording format having a hierarchical management configuration that has been stipulated beforehand, and being of a configuration for performing control for recording said mark management information in an attribute information file storing attribute information stipulated with said data recording format.

6. The information processing device according to Claim 1, **characterized in** said control unit being of a configuration for performing data recording control following the AVCHD format which is a data recording format having a hierarchical management configuration that has been stipulated beforehand, and being of a configuration for performing control for recording said mark management information in an attribute information file storing attribute information stipulated with said AVCHD recording format.

7. The information processing device according to Claim 6, **characterized in** said control unit being of a configuration for performing control to record said mark management information in a play list file or clip information file stipulated with said AVCHD recording format.

8. The information processing device according to Claim 7, **characterized in** said control unit being of a configuration for performing control to record said mark management information in a maker-corresponding information write-permitted region, set in a play list file or clip information file stipulated with said AVCHD recording format.

9. An information processing device **characterized in** having a control unit for performing control of playback or editing processing of data recorded in an information recording medium;
wherein said control unit is of a configuration for performing processing of reading encoded data in which GOPs (Group Of Pictures) configured of picture groups have been set from said information recording medium at the time of performing playback or editing processing, obtaining mark management information corresponding to a mark serving as playback start point information from said information recording medium, confirming GOP attributes indicating whether or not a GOP including said mark is a GOP needing decoding information of another GOP at the time of decoding processing of said GOP, based on said mark management information, and determining a decoding start point in playback processing or a leaving start point in editing processing.

10. The information processing device according to Claim 9, **characterized in** said control unit being of a configuration for performing processing of obtaining playback specification point-in-time (PTS: presentation time stamp) information of a referenced picture included in the GOP to which said mark belongs, and determining a decoding start point in playback processing or a leaving start point in editing processing, based on comparison results with a playback specification point-in-time (PTS) of a picture corresponding to said mark.

11. The information processing device according to Claim 9, **characterized in** said control unit being of a configuration for performing processing of obtaining difference value information between the head picture of the GOP to which said mark belongs and the playback specification point-in-time (PTS: presentation time stamp) of a referenced picture included in the GOP;
and determining a decoding start point in playback processing or a leaving start point in editing processing, based on comparison results of the difference between a mark-corresponding playback specification point-in-time (PTS) corresponding to said mark and a GOP-corresponding playback specification point-in-time (PTS) after said playback specification point-in-time corresponding to said mark, and difference value information recorded in said mark information.

12. The information processing device according to Claim 9, **characterized in** said control unit being of a configuration for obtaining, from said mark management information, device information which has executed the recording processing, and changing the processing form based on the obtained device information.

13. The information processing device according to Claim 9, **characterized in** said control unit being of a configuration for performing playback or editing processing of recorded data following the AVCHD format which is a data recording format having a hierarchical management configuration that has been stipulated beforehand, and being of a configuration for obtaining said mark management information from an attribute information file storing attribute information stipulated with said AVCHD recording format.

14. The information processing device according to Claim 9, **characterized in** said control unit being of a configuration for obtaining said mark management information from a playlist file or clip information file stipulated with said AVCHD recording format.

15. The information processing device according to Claim 14, **characterized in** said control unit being of a configuration for obtaining said mark management information from a maker-corresponding information write-permitted region, set in a play list file or clip information file stipulated with said AVCHD recording format.

16. An information processing method **characterized in** performing data recording processing control as to an information recording medium with an information processing device, said method comprising:
a recording control step wherein a control unit performs recording of encoded data in which GOPs (Group Of Pictures) configured of picture groups have been set, and recording control of management information corresponding to recorded data;
wherein said recording control step includes a mark management information recording step for performing recording processing control of GOP attributes, as mark management information corresponding to a mark serving as playback start point information, indicating whether or not a GOP including said mark is a GOP needing decoding information of another GOP at the time of decoding processing of said GOP.

17. The information processing method according to Claim 16, **characterized in** said mark management information recording step being a step for performing control to record, as said mark management information, playback specification point-in-time (PTS: presentation time stamp) information of a referenced picture included in the GOP to which said mark belongs.

18. The information processing method according to Claim 16, **characterized in** said mark management information recording step being a step for performing control to record, as said mark management information, difference information between the head picture of the GOP to which said mark belongs and the playback specification point-in-time (PTS: presentation time stamp) of a referenced picture included in the GOP to which said mark belongs.

19. The information processing method according to Claim 16, **characterized in** said mark management information recording step being a step for performing control to record, as said mark management information, device information which has executed the recording processing.

20. The information processing method according to Claim 16, **characterized in** said mark management information recording step being a step for performing data recording control following a data recording format having a hierarchical management configuration that has been stipulated beforehand, and being a step for performing control for recording said mark management information in an attribute information file storing attribute information stipulated with said data recording format.

21. The information processing method according to Claim 16, **characterized in** said mark management information recording step being a step for performing data recording control following the AVCHD format which is a data recording format having a hierarchical management configuration that has been stipulated beforehand, and being a step for performing control for recording said mark management information in an attribute information file storing attribute information stipulated with said AVCHD recording format.

22. The information processing method according to Claim 16, **characterized in** said control unit being of a configuration for performing control to record said mark management information in a play list file or clip information file stipulated with said AVCHD recording format.

23. The information processing method according to Claim 16, **characterized in** said mark management information recording step being a step for performing control to record said mark management information in a maker-corresponding information write-permitted region, set in a play list file or clip information file stipulated with said AVCHD recording format.

24. An information processing method **characterized in** performing control of playback or editing processing of data recorded in an information recording medium with an information processing device, said method comprising:
a data processing step wherein a control unit performs processing of reading encoded data in which GOPs (Group Of Pictures) configured of picture groups have been set from said information recording medium at the time of performing playback or editing processing, obtains mark management information corresponding to a mark serving as playback start point information from said information recording medium, confirms GOP attributes indicating whether or not a GOP including said mark is a GOP needing decoding information of another GOP at the time of decoding processing of said GOP, based on said mark management information, and determines a decoding start point in playback processing or a leaving start point in editing processing.

25. The information processing method according to Claim 24, **characterized in** said data processing step being a step for performing processing of obtaining playback specification point-in-time (PTS: presentation time stamp) information of a referenced picture included in the GOP to which said mark belongs, and determining a decoding start point in playback processing or a leaving start point in editing processing, based on comparison results with a playback specification point-in-time (PTS) of a picture corresponding to said mark.

26. The information processing method according to Claim 24, **characterized in** said data processing step being a step for performing control of obtaining difference information between the head picture of the GOP to which said mark belongs and the playback specification point-in-time (PTS: presentation time stamp) of a referenced picture included in the GOP;
and determining a decoding start point in playback processing or a leaving start point in editing processing, based on comparison results of the difference between a mark-corresponding playback specification point-in-time (PTS) corresponding to said mark and a GOP-corresponding playback specification point-in-time (PTS) after said playback specification point-in-time corresponding to said mark, and difference value information recorded in said mark information.

27. The information processing method according to Claim 24, **characterized in** said data processing step being a step for obtaining, from said mark management information, device information which has executed the recording processing, and changing the processing form based on the obtained device information.

28. The information processing method according to Claim 24, **characterized in** said data processing step being a step for performing playback or editing processing of recorded data following the AVCHD format which is a data recording format having a hierarchical management configuration that has been stipulated beforehand, and being a step for obtaining said mark management information from an attribute information file storing attribute information stipulated with said AVCHD recording format.

29. The information processing method according to Claim 28, **characterized in** said data processing step being a step for obtaining mark management information from a play list file or clip information file stipulated with said AVCHD recording format.

30. The information processing method according to Claim 29, **characterized in** said data processing step being a step for obtaining said mark management information from a maker-corresponding information write-permitted region, set in a play list file or clip information file stipulated with said AVCHD recording format.

31. A computer program **characterized in** causing an information processing device to perform data recording processing control as to an information recording medium, said program comprising:
a recording control step wherein a control unit performs recording of encoded data in which GOPs (Group Of Pictures) configured of picture groups have been set, and recording control of management information corresponding to recorded data;
wherein said recording control step includes a mark management information recording step for performing recording processing control of GOP attributes, as mark management information corresponding to a mark serving as playback start point information, indicating whether or not a GOP including said mark is a GOP needing decoding information of another GOP at the time of decoding processing of said GOP.

32. A computer program **characterized in** causing an information processing device to perform control of playback or editing processing of data recorded in an information recording medium, said program comprising:
a data processing step wherein a control unit performs processing of reading encoded data in which GOPs (Group Of Pictures) configured of picture groups have been set from said information recording medium, obtains mark management information corresponding to a mark serving as playback start point information from said information recording medium, confirms GOP attributes indicating whether or not a GOP including said mark is a GOP needing decoding information of another GOP at the time of decoding processing of said GOP, based on said mark management information, and determines a decoding start point in playback processing or a leaving start point in editing processing.
